# EUROPEAN PATENT SPECIFICATION

(11) **EP 4 478 545 B1**
(45) Date of publication and mention of the grant of the patent: **21.10.2026**
(21) Application number: 23792044.2
(22) Date of filing: 23.03.2023
(51) Int. Cl.: H01Q 21/24, H01Q 21/00, H01Q 1/52, H01Q 1/24, H01Q 21/06

(54) **MATCHING NETWORK FOR DECOUPLING BETWEEN POLARIZATIONS OF ANTENNA ARRAY, AND ELECTRONIC DEVICE COMPRISING SAME**
ANPASSUNGSNETZWERK ZUR ENTKOPPLUNG ZWISCHEN POLARISATIONEN EINER GRUPPENANTENNE UND ELEKTRONISCHE VORRICHTUNG DAMIT
RÉSEAU D'ADAPTATION POUR UN DÉCOUPLAGE ENTRE DES POLARISATIONS D'UN RÉSEAU D'ANTENNES, ET DISPOSITIF ÉLECTRONIQUE COMPRENANT CELUI-CI

(30) Priority: 22.04.2022 KR 20220050450
(43) Date of publication of application: 18.12.2024
(73) Proprietor: Samsung Electronics Co., Ltd, Suwon-si, Gyeonggi-do 16677 (KR)
(72) Inventor: LEE, Seokmin, Suwon-si Gyeonggi-do 16677 (KR); KIM, Yoongeon, Suwon-si Gyeonggi-do 16677 (KR); CHOI, Seungho, Suwon-si Gyeonggi-do 16677 (KR); KO, Seungtae, Suwon-si Gyeonggi-do 16677 (KR); LEE, Jungyub, Suwon-si Gyeonggi-do 16677 (KR); HUR, Jun, Suwon-si Gyeonggi-do 16677 (KR)
(74) Representative: Gulde & Partner
(86) International application number: PCT/KR2023/003887
(87) International publication number: WO 2023/204464

(56) References cited:
- CN-A- 109 599 657
- CN-A- 111 180 868
- CN-A- 112 072 303
- CN-A- 113 258 304
- KR-A- 20190 043 484
- KR-A- 20190 089 955
- KR-A- 20220 039 133
- KR-B1- 102 238 396
- US-A1- 2013 285 857
- HAMBERGER GERHARD F ET AL: "A planar dual-polarized microstrip 1D-beamforming antenna array for the 24GHz ISM-band", 2016 10TH EUROPEAN CONFERENCE ON ANTENNAS AND PROPAGATION (EUCAP), EUROPEAN ASSOCIATION OF ANTENNAS AND PROPAGATION, 10 April 2016 (2016-04-10), pages 1 - 5, XP032906161, DOI: 10.1109/EUCAP.2016.7481205
- XIAOJUN TANG ET AL: "A low-profile dual-polarized stacked patch antenna array with mutual coupling reduction for massive MIMO", INTERNATIONAL JOURNAL OF RF AND MICROWAVE COMPUTER-AIDED ENGINEERING, WILEY INTERSCIENCE, HOBOKEN, USA, vol. 31, no. 8, 21 April 2021 (2021-04-21), pages n/a, XP072010682, ISSN: 1096-4290, DOI: 10.1002/MMCE.22713
- ZHANG YI-MING ET AL: "A Transmission-Line-Based Decoupling Method for MIMO Antenna Arrays", IEEE TRANSACTIONS ON ANTENNAS AND PROPAGATION, IEEE, USA, vol. 67, no. 5, 1 May 2019 (2019-05-01), pages 3117 - 3131, XP011722881, ISSN: 0018-926X, [retrieved on 20190502], DOI: 10.1109/TAP.2019.2900406

## Description

### [Technical Field]

The present disclosure relates to a matching network, and more specifically, to a matching network for decoupling between polarizations of an antenna array and an electronic device comprising the same.

### [Background Art]

An electronic device using beamforming technology of a wireless communication system includes a plurality of antenna elements. In this case, a subarray technology may be used to increase a gain of a signal emitted from the electronic device.

The above-described information may be provided as a related art for the purpose of helping to understand the present disclosure. No claim or determination is raised as to whether any of the above-described information may be applied as a prior art related to the present disclosure.

CN 111180868 A discloses a spaceborne Synthetic Aperture Radar (SAR) dual-polarized microstrip radiating sub-array antenna.

CN 109599657 A discloses a 5G base station antenna array based on the integrated design of the antenna array and the power distribution network and design methods.

CN 113258304 A discloses a dual-polarization high isolation antenna array and communication equipment, which can achieve good decoupling effects in the millimeter wave frequency band and achieve high isolation performance.

HAMBERGER GERHARD F ET AL: "A planar dual-polarized microstrip 1D-beamforming antenna array for the 24GHz ISM-band", 2016 10TH EUROPEAN CONFERENCE ON ANTENNAS AND PROPAGATION (EUCAP), EUROPEAN ASSOCIATION OF ANTENNAS AND PROPAGATION, 10 April 2016, pages 1-5, discloses a planar dual-polarized patch antenna array with vertical beamforming capability.

XIAOJUN TANG ET AL: "A low-profile dual-polarized stacked patch antenna array with mutual coupling reduction for massive MIMO", INTERNATIONAL JOURNAL OF RF AND MICROWAVE COMPUTER AIDED ENGINEERING, WILEY INTERSCIENCE, HOBOKEN, USA, vol. 31, no. 8, 21 April 2021, discloses a 2 x 2 stacked patch antenna array with low profile and compact size.

ZHANG YI-MING ET AL: "A Transmission-Line-Based Decoupling Method for MIMO Antenna Arrays", IEEE TRANSACTIONS ON ANTENNAS AND PROPAGATION, IEEE, USA, vol. 67, no. 5, 1 May 2019, pages 3117-3131, discloses a transmission-line-based decoupling technique for dual-polarized multiple-input and multiple-output (MIMO) antenna arrays.

CN 112 072 303 A discloses a decoupling network and a method and device for installing the decoupling network.

### [Disclosure]

### [Technical Solution]

The present invention is defined by the appended set of claims. Preferred embodiments are defined by the dependent claims. An electronic device according to embodiments is provided. The electronic device includes an antenna substrate, and an antenna array including a subarray. The subarray includes a plurality of antenna elements. The electronic device includes a feeding network circuitry including a first power divider for a first polarization and a second power divider for a second polarization different from the first polarization. The electronic device comprises a network circuitry for decoupling of a first signal of the first power divider and a second signal of the second power divider. The subarray is disposed on a first side of the antenna substrate. The feeding network circuitry is disposed on a second side of the antenna substrate opposite to the first side of the antenna substrate. The network circuitry for decoupling is disposed in a region between the first power divider and the second power divider on the first side of the antenna substrate.

According to embodiments, an electronic device is provided. The electronic device includes a processor, a metal plate, a plurality of antenna substrates, and an array antenna including a plurality of subarrays. For each subarray, a subarray among the plurality of subarrays includes a feeding network circuitry including a first power divider for a first polarization and a second power divider for a second polarization different from the first polarization, and a network circuitry for decoupling of a first signal of the first power divider and a second signal of the second power divider. The subarray among the plurality of subarrays is disposed on a first side of the antenna substrate corresponding to the subarray. The feeding network circuitry is disposed on a second side of the antenna substrate opposite to the first side of the antenna substrate. The network circuitry for decoupling is disposed in a region between the first power divider and the second power divider on the first side of the antenna substrate.

### [Description of the Drawings]

FIG. 1 illustrates a wireless communication system according to embodiments.
FIG. 2 illustrates examples of an antenna array according to embodiments.
FIG. 3 illustrates examples of isolation characteristic of an antenna array according to embodiments.
FIG. 4 illustrates an example of a decoupling coupler according to embodiments.
FIG. 5 illustrates examples of a deployment of a decoupling coupler according to embodiments.
FIGS. 6A, 6B, and 6C illustrate examples of a shape of a decoupling coupler according to embodiments.
FIG. 7 illustrates examples of a deployment of a decoupling coupler and a power divider according to embodiments not being covered by the claims.
FIG. 8 illustrates other examples of a deployment of a decoupling coupler and a power divider according to embodiments.
FIG. 9 illustrates an example of decoupling in a subarray according to embodiments.
FIG. 10 is a diagram for describing a principle of a decoupling coupler according to embodiments.
FIG. 11 illustrates an example of equivalent circuitry of a feeding part of a subarray to which a decoupling coupler is coupled according to embodiments.
FIGS. 12A and 12B illustrate an example of a deployment of a decoupling coupler according to embodiments.
FIGS. 13A and 13B illustrate examples of the performance of a decoupling coupler according to embodiments.
FIG. 14 illustrates an example of an array antenna having decoupling couplers according to an embodiment.
FIG. 15 illustrates a functional configuration of an electronic device including an antenna having a decoupling coupler according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Term referring to a component of an electronic device (e.g., substrate, print circuit board (PCB), flexible PCB (FPCB), module, antenna, antenna element, circuitry, processor, chip, component, device), term referring to a shape of component (e.g., structures, structure, support part, contact part, protrusion part), term referring to connection part between structures (e.g., connection part, contact part, support part, contact structures, conductive member, assembly), term referring to circuitry (e.g., PCB, FPCB, signal line, feeding line, data line, RF signal line, antenna line, RF path, RF module, RF circuitry, splitter, divider, coupler, combiner), and the like used in the following description are exemplified for convenience of explanation. Therefore, the present disclosure is not limited to terms described below, and another term having an equivalent technical meaning may be used. In addition, a term such as '...part', '...er', '...material', and '...body', and the like used below may mean at least one shape structure or may mean a unit processing a function. In addition, hereinafter, 'A' to 'B' means at least one of elements from A (including A) to B (including B). Hereinafter, 'C' and/or 'D' means that at least one of 'C' or 'D', that is, {'C', 'D', 'C', and 'D'}.

In addition, in the present disclosure, the term 'greater than' or 'less than' may be used to determine whether a particular condition is satisfied or fulfilled, but this is only a description to express an example and does not exclude the description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'.

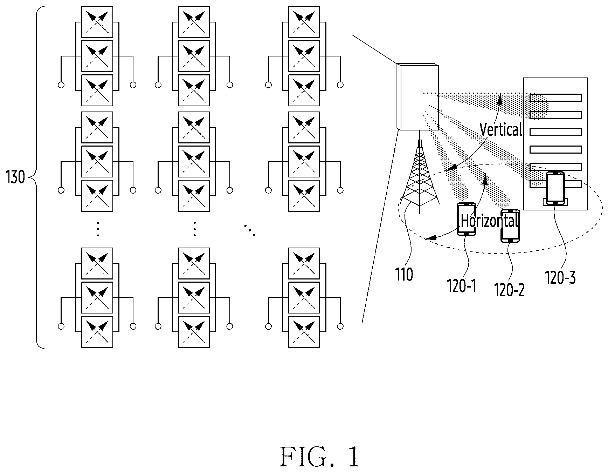

FIG. 1 illustrates a wireless communication system according to embodiments. A wireless communication environment 100 of FIG. 1 is a portion of nodes using a wireless channel, and exemplifies a base station 110 and a terminal (e.g., terminal 120-1, terminal 120-2, terminal 120-3, and hereinafter 120).

Referring to FIG. 1, the base station 110 is a network infrastructure that provides wireless access to the terminal 120. The base station 110 has coverage defined as a predetermined geographic region based on a distance capable of transmitting a signal. In addition to the base station, the base station 110 may be referred to as 'access point (AP), 'eNodeB (eNB), '5G node' (5th generation node), '5G nodeB (NB)', 'wireless point', 'transmission/reception point (TRP), 'access unit', 'distributed unit (DU), 'transmission/reception point (TRP), 'radio unit (RU)', remote radio head (RRH), or another term having a technical meaning equivalent thereto. The base station 110 may transmit a downlink signal or receive an uplink signal.

The terminal 120 is a device used by a user and performs communication with the base station 110 through a wireless channel. In some cases, the terminal 120 may be operated without the user involvement. That is, the terminal 120, which is a device performing machine type communication (MTC), may not be carried by the user. In addition to the terminal, the terminal 120 may be referred to as 'user equipment (UE), 'mobile station', 'subscriber station', 'customer premises equipment (CPE), 'remote terminal', 'wireless terminal', 'electronic device', or 'terminal for vehicle', 'user device' or another term having a technical meaning equivalent thereto.

Beamforming technology is being used as one of technology to mitigate radio waves path loss and increase a transmission distance of radio waves. In general, an arrival region of radio waves is concentrated by beamforming using a plurality of antennas or the directivity of reception sensitivity in a specific direction is increased by beamforming. Therefore, in order to form beamforming coverage instead of forming a signal in an isotropic pattern using a single antenna, the base station 110 may be provided with a plurality of antennas. According to an embodiment, the base station 110 may include a Massive MIMO Unit (MMU). A shape in which a plurality of antennas is assembled may be referred to as an antenna array 130, and each antenna included in the array may be referred to as an array element or an antenna element. The antenna array 130 may be configured in various form such as a linear array and a planar array. The antenna array 130 may be referred to as a passive antenna array.

Main technology for improving data capacity of 5G communication is beamforming technology using an antenna array connected to a plurality of RF paths. For higher data capacity, the number of RF paths should be increased or power per the RF path should be increased. Increasing the RF path increases a size of the product and is currently at a level that may not be increased any more due to a space constraint in installing actual base station equipment. An antenna gain may be increased by connecting a plurality of antenna elements to the RF path using a divider (or splitter) in order to increase the antenna gain through high power without increasing the number of RF paths. Herein, antenna elements corresponding to the RF path may be referred to as a subarray.

In order to improve communication performance, the number of antennas (or antenna elements) of equipment (e.g., base station 110) that perform wireless communication is increasing. In addition, since the number of an RF component (e.g., amplifier, filter) to process a RF signal received or transmitted through antenna elements and components increases, a spatial gain and cost efficiency are necessarily required while satisfying communication performance in configuring communication equipment.

In FIG. 1, the base station 110 of FIG. 1 has been described as an example to describe the matching network of the antenna of the present disclosure and the electronic device including the same, but embodiments of the present disclosure are not limited thereto. It goes without saying that wireless equipment that performs the same function as the base station, wireless equipment (e.g., TRP) connected to the base station, the terminal 120 in FIG. 1, or other communication equipment used for 5G communication are also possible, in addition to the base station 110, as a matching network according to embodiments of the present disclosure and an electronic device including the same.

Hereinafter, the present disclosure describes the antenna array configured with subarrays as an example as a structure of a plurality of antennas for communication in a Multiple Input Multiple Output (MIMO) environment, but it is of course possible to easily change for beamforming in a portion of embodiments.

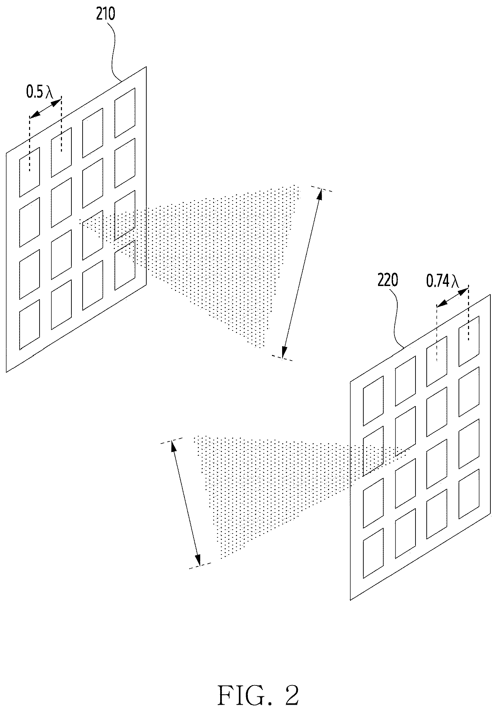

FIG. 2 illustrates examples of an antenna array (e.g., antenna array 130) according to embodiments. The antenna array illustrates the antenna array of the base station 110 of FIG. 1. As the number of antenna elements increases, miniaturization and weight reduction of the antenna array are required.

Referring to FIG. 2, the antenna array may be used for beamforming. In using beamforming technology, an electronic device may use subarray technology. The subarray technology refers to a technology of dividing a fed signal and feeding it to several antenna elements for increasing a gain of the corresponding signal. The subarray technology may be applied equally to receiving a signal. Antenna elements configured with a subarray may emit a signal transmitted (or fed) from a radio frequency integrated circuit (RFIC) or transmit signals received from another device to the RFIC. According to an embodiment, the electronic device may include a plurality of subarrays.

A beam width used to transmit a signal in a wireless channel is dependent on a space between antenna elements of the antenna array. The space between antenna elements in the antenna array may be determined based on price competitiveness and beamforming performance. For example, a space between antenna elements disposed in a horizontal direction in a first antenna array 210 may be 0.5λ. The first antenna array 210 may form a beam having a beam width corresponding to about 90 degrees in the horizontal direction. For example, a space between antenna elements disposed in the horizontal direction in a second antenna array 220 may be 0.74 λ. The second antenna array 220 may form a beam having a beam width corresponding to about 65 degrees in the horizontal direction.

If the space between antenna elements is narrowly disposed for beamforming according to the required a beam width, there may not be enough space for deployment of components for feeding the signal to the antenna elements. For example, in order to reduce production cost and reduce weight, a dielectric substrate (e.g., plastic substrate) may be used. Due to a support structure of screws and the dielectric substrate when combining the dielectric substrate and a metal plate, it may be difficult to dispose a power divider (e.g., 300 MHz broadband distributor) of each subarray. In order to increase design flexibility of the power divider of the subarray, a structure between antenna elements may be removed. However, even if a lot of space is secured, deterioration in isolation performance may occur.

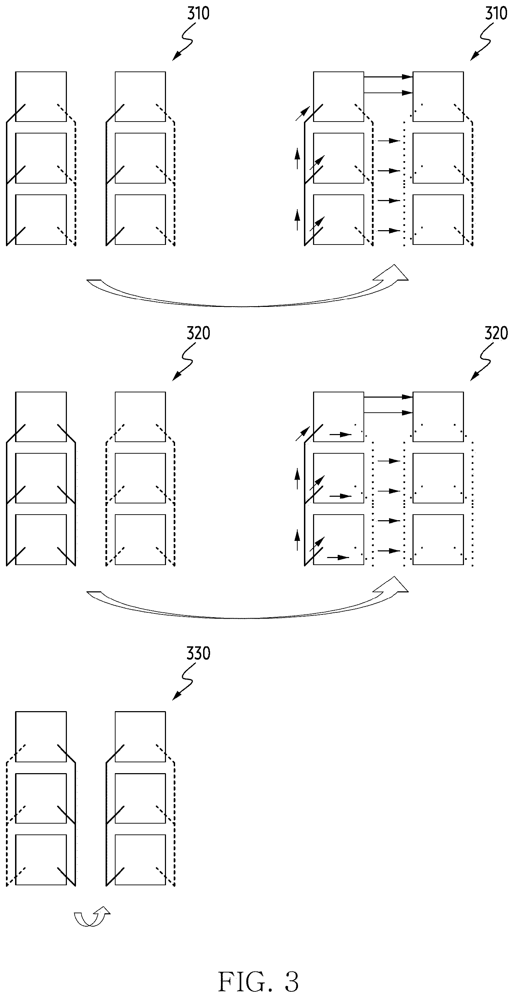

FIG. 3 illustrates examples of isolation characteristic of an antenna array according to embodiments.

Referring to FIG. 3, subarrays 310 may include two 3x1 subarrays. 3x1 subarrays may be disposed in a horizontal direction. Isolation characteristic may include co-pol isolation. A signal of a first polarization (e.g., about (+)45 degrees) and a signal of a second polarization (e.g., about (-)45 degrees) perpendicular to the first polarization may be fed to antenna elements of each subarray. As an example, the first polarization and the second polarization may be substantially vertical. A solid line represents a power divider to which a signal of the first polarization is fed, and a dotted line represents a power divider to which a signal of the second polarization is fed. Co-pol isolation refers to isolation characteristic between signals having the same polarization. Co-pol isolation represents isolation between the solid line of the subarray on the left and the solid line of the subarray on the right. Co-pol isolation represents isolation between the dotted line of the subarray on the left and the dotted line of the subarray on the right. An antenna element located on the left may have a radiation effect on an antenna element located on the right (i.e., patch-to-patch radiation). In addition, a signal induced due to a surface current of a substrate including subarrays may affect a signal with the same polarization of another subarray.

The subarrays 320 may include two 3x1 subarrays. The 3x1 subarrays may be disposed in the horizontal direction. Isolation characteristic may include cross-pol isolation. Cross-pol isolation may be referred to as X-pol isolation. The signal of the first polarization and the signal of the second polarization perpendicular to the first polarization may be fed to antenna elements of each subarray. A solid line represents a feeding part for the signal of the first polarization and a feeding part for the signal of the second polarization in the first subarray, and a dotted line represents a feeding part for the signal of the first polarization and a feeding part for the signal of the second polarization in the second subarray. Cross-pol isolation refers to isolation characteristic between signals with a perpendicular polarization. Cross-pol isolation represents isolation between the solid lines of the first subarray. Cross-pol isolation represents isolation between the dotted lines of the second subarray. The feeding part located on the left may have a radiation effect on the feeding part located on the right. In addition, the feeding part located on the left side of the first subarray may have a radiation effect on the feeding part located on the right side of the second subarray (i.e., patch-to-patch radiation). In addition, a signal induced due to a surface current of a substrate including subarrays may affect a signal with the same polarization of another subarray.

The subarrays 320 may include two 3x1 subarrays. The 3x1 subarrays may be disposed in the horizontal direction. Isolation characteristic may include adjacent cross-pol isolation. Adjacent cross-pol isolation may be referred to as adjacent X-pol isolation. The signal of the first polarization and the signal of the second polarization perpendicular to the first polarization may be fed to antenna elements of each subarray. A solid line represents a feeding part for the signal of the second polarization in the first subarray and a feeding part for the signal of the first polarization in the second subarray. A dotted line represents a feeding part for the signal of the first polarization in the first subarray and a feeding part for the signal of the second polarization in the second subarray. Adjacent cross-pol isolation refers to isolation characteristic between signals having a perpendicular polarization among signals between adjacent subarrays. Adjacent cross-pol isolation represents isolation between the solid lines. In deployment of the subarrays 330, the polarizations of the two signals illustrated by the solid line are perpendicular to each other. Therefore, adjacent cross-pol isolation performance between the two subarrays may be higher than the above-described co-pol isolation or cross-pol isolation.

As described through FIG. 3, when subarrays are disposed in the horizontal direction, isolation performance may deteriorate due to a narrowing antenna space. In particular, the signal of the first polarization emitted from the corresponding subarray is induced by the signal of the second polarization of an adjacent subarray, causing deterioration in performance of cross-pol isolation. As a plurality of subarrays further are disposed in the horizontal direction for beamforming, performance of cross-pol isolation may further deteriorate. In addition, due to structural limitation between the subarray and the substrate, it is not easy to improve performance of cross-pol isolation through a design change of the power divider. Therefore, embodiments of the present disclosure propose an antenna design that is flexible in deployment of power divider and increases performance of cross-pol isolation without a structure such as a wall.

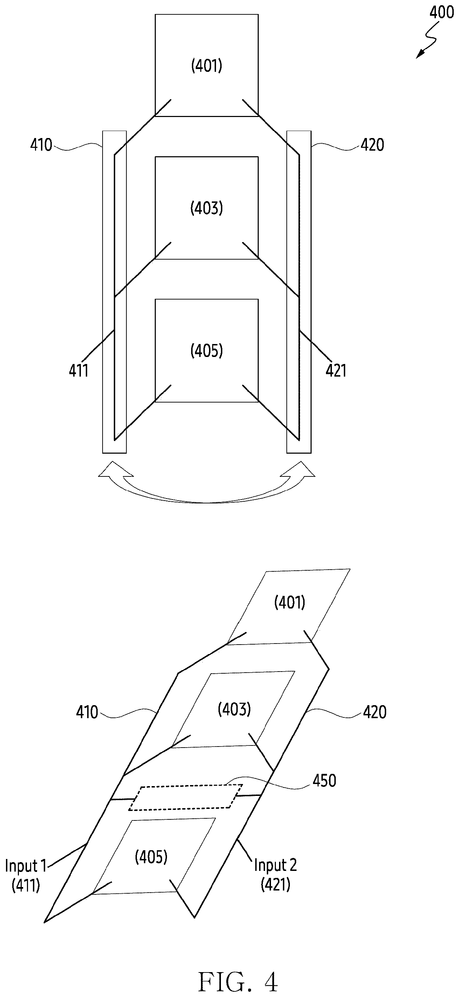

FIG. 4 illustrates an example of a decoupling coupler according to embodiments. The decoupling coupler may exemplify decoupling network circuitry. The decoupling network circuitry refers to matching circuitry for increasing isolation between ports of an antenna element. The decoupling coupler is exemplified in describing embodiments of the present disclosure, but it goes without saying that one of the various implementation methods (e.g., transmission line, strip, microstrip, or lumped element such as capacitor or inductor) for performing the same technical function may be used instead.

Referring to FIG. 4, a subarray 400 may include a 3x1 subarray. The subarray may include three antenna elements. The subarray 400 may include a first antenna element 401, a second antenna element 403, and a third antenna element 405. A signal 411 of a first polarization (e.g., about (+)45 degrees) may be fed to the subarray 400. The signal 411 of the first polarization may be transmitted to each antenna element (e.g., the first antenna element 401, the second antenna element 403, or the third antenna element 405) of the subarray 400 through a first power divider 410. A signal 421 of a second polarization (e.g., about (-)45 degrees) may be fed to the subarray 400. The signal 421 of the second polarization may be transmitted to each antenna element (e.g., the first antenna element 401, the second antenna element 403, or the third antenna element 405) of the subarray 400 through a second power divider 420. As described through FIG. 3, a signal flow of the first power divider 410 may affect a signal flow of the second power divider 420. A structure for re-radiation may be required between two power dividers (the first power divider 410 and the second power divider 420), in order to improve isolation (e.g., cross-pol isolation) performance between different polarizations.

According to an embodiment, a decoupling coupler 450 may be disposed between the first power divider 410 and the second power divider 420. As signals with different polarizations are fed within a certain distance, a signal affects another signal electrically and magnetically. This effect may be referred to as coupling. The decoupling coupler 450 may be designed for isolation between a first port into which the signal of the first polarization is inputted and a second port into which the signal of the second polarization is inputted. The decoupling coupler 450 may function as a matching network so that a signal applied to the first port less affects a signal applied to the second port. For example, the decoupling coupler 450 may be implemented in the form of a microstrip or strip in which the amount of coupling is controlled by space and a length of the line.

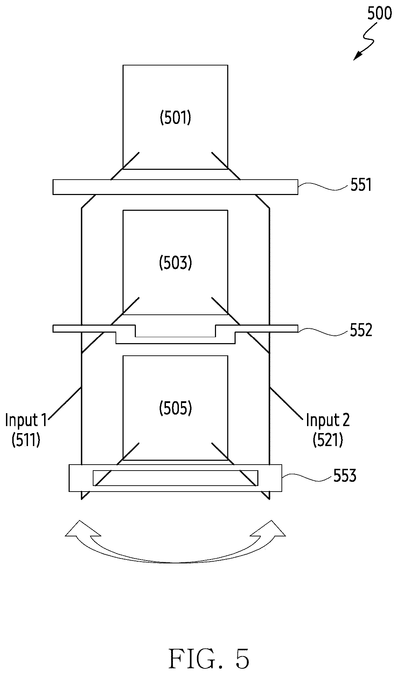

Although FIG. 4 illustrates that the decoupling coupler 450 is located between the second antenna element 403 and the third antenna element 405, embodiments of the present disclosure are not limited thereto. The decoupling coupler 450 may be located in a region capable of providing an electrical connection (e.g., direct feeding or coupling feeding) between the two power dividers, even if it is not between the second antenna element 403 and the third antenna element 405. Specific examples are described in FIG. 5.

FIG. 5 illustrates examples of a deployment of a decoupling coupler (e.g., a decoupling coupler 450) according to embodiments. The decoupling coupler may exemplify decoupling network circuitry (or decoupling matching network circuitry). The decoupling network circuitry refers to matching circuitry for increasing isolation between ports of an antenna element.

Referring to FIG. 5, a subarray may include a 3x1 subarray. The subarray may include three antenna elements. The subarray may include a first antenna element 501, a second antenna element 503, and a third antenna element 505. A signal 511 of a first polarization may be fed to the subarray. The signal 511 of the first polarization may be transmitted to each antenna element of the subarray through a first power divider. A signal 521 of a second polarization may be fed to the subarray. The signal 521 of the second polarization may be transmitted to each antenna element of the subarray through a second power divider.

According to an embodiment, a first decoupling coupler 551 may be disposed between the first antenna element 501 and the second antenna element 503. The first decoupling coupler 551 may provide a connection between the first power divider to which the signal 511 of the first polarization is fed and the second power divider to which the signal 512 of the second polarization is fed. Through the first decoupling coupler 551, isolation between the signal 511 of the first polarization and the signal 521 of the second polarization may increase. According to an embodiment, the first decoupling coupler 551 may include a strip-shaped transmission line.

According to an embodiment, a second decoupling coupler 552 may be disposed between the second antenna element 501 and the third antenna element 503. The second decoupling coupler 552 may provide a connection between the first power divider to which the signal 511 of the first polarization is fed and the second power divider to which the signal 512 of the second polarization is fed. Through the second decoupling coupler 552, isolation between the signal 511 of the first polarization and the signal 521 of the second polarization may increase. According to an embodiment, the second decoupling coupler 552 may include a U-shaped transmission line.

According to an embodiment, the third decoupling coupler 553 may be disposed under the third antenna element 503. The third decoupling coupler 553 may provide a connection between the first power divider to which the signal 511 of the first polarization is fed and the second power divider to which the signal 512 of the second polarization is fed. Through the third decoupling coupler 553, isolation between the signal 511 of the first polarization and the signal 521 of the second polarization may increase. According to an embodiment, the third decoupling coupler 553 may include a loop-shaped transmission line.

Although FIG. 5 illustrates three decoupling couplers of different shapes, embodiments of the present disclosure are not limited thereto. Even if one decoupling coupler is disposed between two dividers as illustrated in FIG. 4, it may be understood as an embodiment of the present disclosure. In addition, according to an embodiment, a portion of the three decoupling couplers may be omitted. In addition, according to an embodiment, all three decoupling couplers may have the same shape (e.g., metal strip). In addition, according to an embodiment, shapes of the three decoupling couplers may be different from those of FIG. 5. In addition, according to an embodiment, lengths of the three decoupling couplers may all be different. In addition, according to an embodiment, a portion of the three decoupling couplers may have the same lengths.

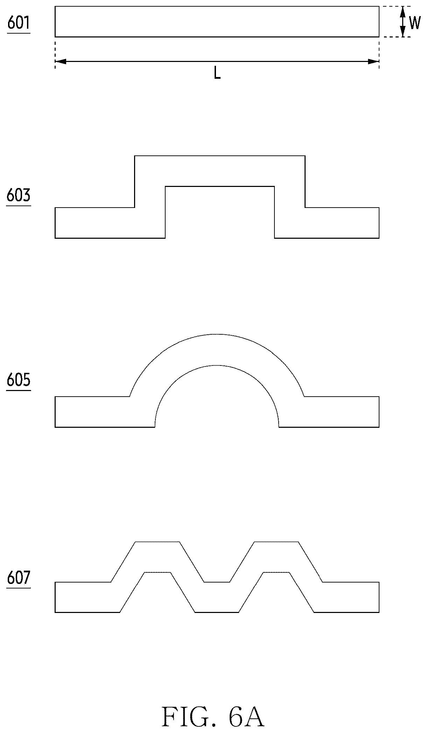

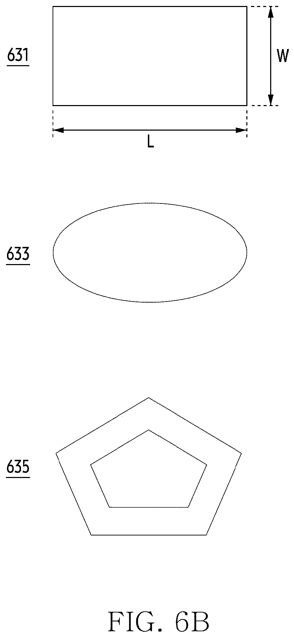

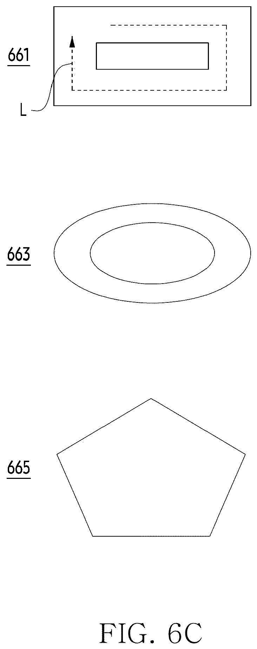

Hereinafter, an effect according to various types and a size of the decoupling coupler according to embodiments of the present disclosure will be described through FIGS. 6A, 6B, and 6C.

FIGS. 6A, 6B, and 6C illustrate examples of a shape of a decoupling coupler according to embodiments. Various shapes may be used to improve coupling of power dividers configuring a subarray. For beamforming, as subarrays are concentrated, the shape of a decoupling coupler to obtain effective coupling performance in a narrow space is required to be defined. Hereinafter, various shapes of the decoupling coupler described in FIGS. 4 to 5 will be described.

Referring to FIG. 6A, according to an embodiment, a type of the decoupling coupler may be a strip line. For example, the shape of the decoupling coupler may be a straight strip line 601 with a length 'L' and a width 'W'. As another example, the shape of the decoupling coupler may be a U-shaped strip line 603. In another example, the shape of the decoupling coupler may be an arch-shaped strip line 605. In another example, the shape of the decoupling coupler may be an M-shaped strip line 607. According to an embodiment, the length of the strip line may be required to satisfy the following equation. [Equation 1] $\frac{{λ}_{g}}{4} \leq L \leq \frac{{λ}_{g}}{2}$

L may be a length of the strip line, and λ_{g} may be the effective wavelength. For example, λ_{g} may be determined based on the following equation. [Equation 2] ${λ}_{0} = \frac{{c}_{0}}{{f}_{0}} , {λ}_{g} = \frac{{λ}_{0}}{{ε}_{eff}}$

*c*₀ means propagation speed, *f*₀ means an operating frequency, and ε_{eff} means an effective dielectric constant. For example, ε_{eff} may be determined based on the following equation. [Equation 3] ${ε}_{eff} = \frac{{ε}_{R} + 1}{2} + \frac{{ε}_{R} - 1}{2} \left[\frac{1}{\sqrt{1 + 12 \left(\frac{h}{W}\right)}}\right]$

εᵣ means relative permittivity, W means a width, and h means thickness of a substrate. A length of a patch may be determined based on the following equation. [Equation 4] $L = \frac{c}{2 {f}_{0} \sqrt{{ϵ}_{eff}}} - 0.824 h \left(\frac{\left({ϵ}_{eff}+0.3\right) \left(\frac{W}{h}+0.264\right)}{\left({ϵ}_{eff}-0.258\right) \left(\frac{W}{h}+0.8\right)}\right)$

Referring to FIG. 6B, according to an embodiment, the type of a decoupling coupler may be a patch. For example, the shape of the decoupling coupler may be a straight patch 631 with a length 'L' and a width 'W'. As another example, the shape of the decoupling coupler may be an elliptical patch 633. In another example, the shape of the decoupling coupler may be a polygonal patch 635. According to an embodiment, the length of the patch may be required to satisfy the following equation. [Equation 5] $\frac{{λ}_{g}}{2.5} \leq L \leq \frac{{λ}_{g}}{1.5}$

L may be the length of the patch, and λ_{g} may be the effective wavelength.

Referring to FIG. 6C, according to an embodiment, the type of the decoupling coupler may be a loop. In order not to overlap with an additional structure (e.g., screw, dielectric support) on one side of an antenna substrate, a loop-shaped decoupling coupler may be used. For example, the shape of the decoupling coupler may be a right-angled loop 661. As another example, the shape of the decoupling coupler may be an elliptical loop 663. As still another example, the shape of the decoupling coupler may be a polygonal loop 665. According to an embodiment, the length of the loop may be required to satisfy the following equation. [Equation 6] $\frac{{λ}_{g}}{5} \leq L \leq \frac{{λ}_{g}}{3}$

L may be the length of the patch, and λ_{g} may be the effective wavelength.

According to an embodiment, the decoupling coupler may be formed on the antenna substrate in a plating method. According to an embodiment, the decoupling coupler may be formed on the antenna substrate in a Laser Direct Structuring (LDS) method. According to an embodiment, the power divider may be formed on the antenna substrate in the plating method. According to an embodiment, the power divider may be formed on the antenna substrate in the Laser Direct Structuring (LDS) method. According to an embodiment, the decoupling coupler may be formed in the same method as the method of forming the feeding lines of the power divider. A material of the decoupling coupler may be the same as a material of the power divider.

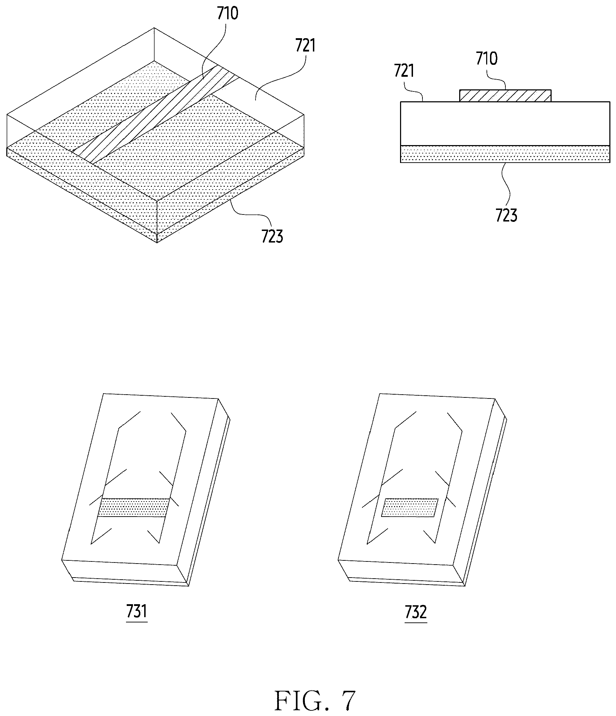

FIG. 7 illustrates examples of a deployment of a decoupling coupler (e.g., decoupling coupler 450) and a power divider according to embodiments. The power divider refers to circuitry including a branch structure for applying a fed signal to each antenna element. The power divider may include a power divider for a first polarization and a power divider for a second polarization. The power divider refers to circuitry including the branch structure for applying the fed signal to each antenna element. The power divider may include feeding lines for providing a signal. Each antenna element of the subarray may be connected to the power divider.

Referring to FIG. 7, in a perspective view, a line 710 represents a feeding line configuring a power divider. An antenna substrate 721 may be a substrate on which antenna elements are disposed. According to an embodiment, the antenna substrate 721 may include a dielectric substrate. According to another embodiment, the antenna substrate 721 may include a metal plate. The metal plate 723 may be a substrate for providing a ground plane. One or more antenna substrates (e.g., the antenna substrate 721) may be coupled to the metal plate 723. According to an embodiment, the power divider may be disposed on the same first side as the side on which the antenna elements of the antenna substrate 721 are disposed. That is, the line 710 may be located on the first side of the antenna substrate 721. The antenna substrate 721 may be coupled to the metal plate 723 on a second side opposite to the first side of the antenna substrate 721. Referring to a front view, the antenna substrate 721 may be stacked on the metal plate 723, and the line 710 may be disposed in the antenna substrate 721.

According to an embodiment, a coupler (hereinafter, a decoupling coupler) for decoupling matching between polarizations may be disposed on the first side of the antenna substrate 721. In an example 731, the decoupling coupler may be directly connected to the power divider disposed on the same first side. For example, the decoupling coupler may distribute power through direct coupling (or direct connection) between the line for the first polarization and the line for the second polarization. Capacitance between the two lines may be formed. As power is distributed through high capacitance, isolation characteristic between the two lines may be strengthened. In another example 732, the decoupling coupler may be indirectly connected to the power divider disposed on the same first side. For example, the decoupling coupler may distribute power by providing an indirect connection through coupling between the line for the first polarization and the line for the second polarization. Capacitance between the two lines may be formed. As power is distributed through high capacitance, isolation characteristic between the two lines may be strengthened.

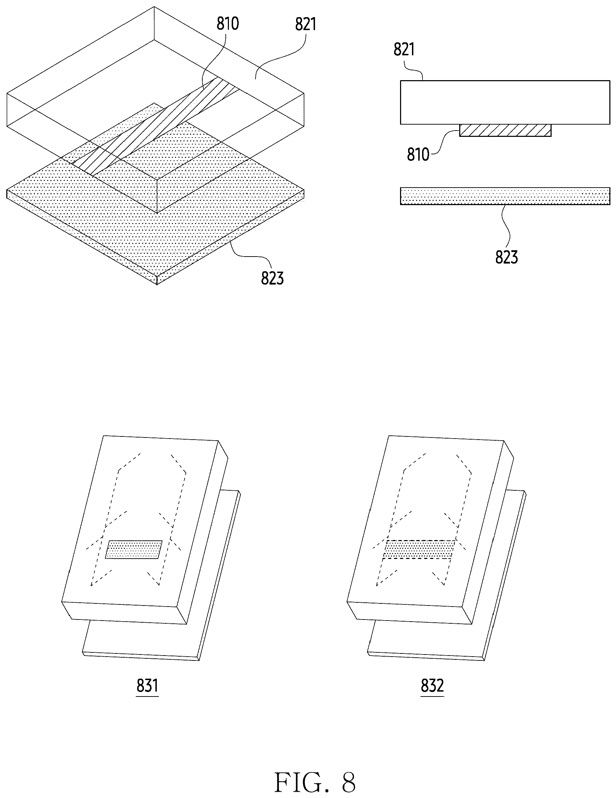

FIG. 8 illustrates other examples of a deployment of a decoupling coupler (e.g., decoupling coupler 450) and a power divider according to embodiments.

Referring to FIG. 8, in a perspective view, a line 810 represents a feeding line configuring the power divider. An antenna substrate 821 may be a substrate on which antenna elements are disposed. According to an embodiment, the antenna substrate 821 may include a dielectric substrate. According to another embodiment, the antenna substrate 821 may include a metal plate. A metal plate 823 may be a substrate for providing a ground plane. A space may exist between the antenna substrate 821 and the metal substrate 823. Although FIG. 8 illustrates that the antenna substrate 821 is separated from the metal plate 823, it means that there is the space between the two substrates in a portion of a region of the entire array antenna. Although not illustrated in FIG. 8, the antenna substrate 821 may be coupled to the metal plate 823 through another structure, or the antenna substrate 821 may be coupled to the metal plate 823 by a support integrally formed with the antenna substrate 821. For example, a partial region of one dielectric may function as the antenna substrate 821, and another region may function as a structure supporting the antenna substrate 821.

According to an embodiment, the power divider may be disposed on a second side different from a first side on which antenna elements of the antenna substrate 821 are disposed. The second side may be an opposite side to the first side. That is, the line 810 may be located on the second side of the antenna substrate 821. Referring to the front view, the antenna substrate 821 may be stacked on the metal plate 823 at intervals, and the line 810 may be disposed on a rear side of the antenna substrate 821. As the power divider is located on the rear side of the antenna substrate 821, an upper side of the antenna substrate 821 may have a relatively free space. Thus, a design of other structures such as antenna elements may be facilitated.

According to an embodiment, a coupler (hereinafter, a decoupling coupler) for decoupling matching between polarizations may be disposed on the first side of the antenna substrate 821. In an example 831, the decoupling coupler may be indirectly connected to the power divider disposed on the other second side. Power may be distributed by being provided an indirect connection through coupling between the line for the first polarization and the line for the second polarization through the decoupling coupler. Capacitance may be formed between the two lines. As power is distributed through high capacitance, isolation characteristic between the two lines may be strengthened. According to another example not being covered by the claims, the coupler (hereinafter, decoupling coupler) for decoupling matching between polarizations may be disposed on the second side of the antenna substrate 821. In this case, the decoupling coupler may be directly connected (e.g., example 832) or indirectly connected to the power divider at the rear side of the antenna substrate 821.

Decoupling is a function to reduce or eliminate a radio frequency (RF) energy flowing into an input network and to reduce a peak of a current surge induced in the substrate. The coupler may include an input port, a through port, a coupled port for extracting a portion of power passing through, and an isolated port. The two lines may be disposed close together, and the amount of coupling may be adjusted based on a space between the lines and a length of each line. According to an embodiment, a principle of the coupler may be applied to an antenna subarray according to an embodiment of the present disclosure not to isolate between antenna elements, but to isolate between two ports fed to the antenna element. Through a decoupling matching network technique, a coupler may be disposed between feeding lines (e.g., the power divider for the first polarization and the second power divider for the second polarization) inputted to antenna ports. The coupler may be disposed between the power divider for the first polarization and the power divider for the second polarization in each subarray of the antenna array, so that a signal applied to the first port less affects a signal applied to the second port. The coupler may be referred to as a decoupling coupler (or a decoupling matching network (DMN) or a decoupling network (DN)).

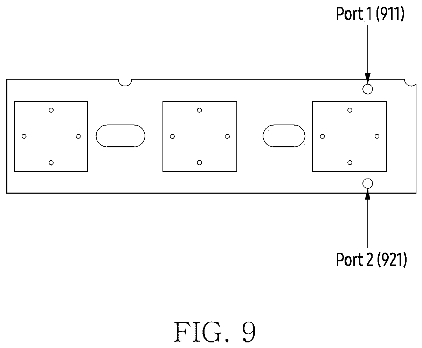

FIG. 9 illustrates an example of decoupling in a subarray according to embodiments. A decoupling coupler (e.g., decoupling coupler 450) according to embodiments of the present disclosure may be disposed for connection between two polarizations of a subarray to improve cross-pol isolation performance.

Referring to FIG. 9, the subarray may include a first port 911 providing a signal of a first polarization and a second port 921 providing a signal of a second polarization. The second polarization may be perpendicular to the first polarization. For example, the first polarization may be +45 degrees polarization, and the second polarization may be -45 degrees polarization. For example, the first polarization may be N-polarization (N-pol) and the second polarization may be P-polarization (P-pol).

The decoupling coupler may function to prevent a signal of a specific polarization from being induced to another space (e.g., a radiating region of a signal of another polarization in a lateral direction), or to reduce the intensity of caused radio waves. Coupling between polarizations may reduce an influence of a signal of a specific polarization on a signal of another polarization. Although only one subarray is illustrated in FIG. 9, interference between different polarizations may also occur between subarrays. Embodiments of the present disclosure may use a decoupling coupler in the region of the subarray instead of suppressing the interference through the insertion of a structure such as a wall. Since an additional structure is not required, a restriction of a deployment of components (e.g., plastic rib, screw) for the antenna substrate may be reduced.

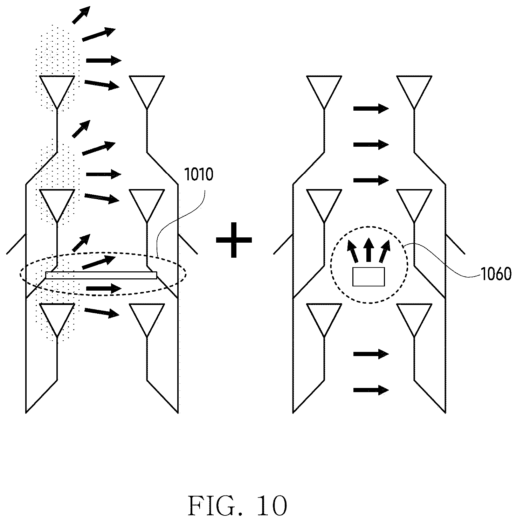

FIG. 10 is a diagram for describing a principle of a decoupling coupler (e.g., decoupling coupler 450) according to embodiments. The decoupling coupler may be disposed between two lines. The two lines may include a first line for a first polarization and a second line for a second polarization. The decoupling coupler may distribute power supplied from a line to another line for isolation between the two lines.

Referring to FIG. 10, according to an embodiment, the decoupling coupler 1010 may be directly connected to a power divider. The power divider may include a first power divider for N-pol and a second power divider for P-pol. The decoupling coupler 1010 may directly connect the first power divider and the second power divider. The decoupling coupler 1010 may function to offset a signal induced from N-pol to P-pol. That is, a signal coupled between two polarizations may be offset.

According to an embodiment, the decoupling coupler 1060 may be indirectly connected to the power divider. The power divider may include the first power divider for N-pol and the second power divider for P-pol. An indirect connection refers to an electrical connection with two power dividers provided through a coupling feeding method without being directly connected with two power dividers. The decoupling coupler 1060 may function to offset a signal induced from N-pol to P-pol. That is, the signal coupled between two polarizations may be offset.

According to an embodiment, the decoupling coupler 1060 may re-radiate a signal induced from an antenna substrate. Through the re-radiation, the amount of a signal induced from a left subarray to a right subarray may decrease, or the amount of a signal induced from the right subarray to the left subarray may decrease. By reducing unnecessary surface waves, coupling between signals of different polarizations may be alleviated.

The loss during signal transmission is illustrated in Equation 7 below. [Equation 7] $α = {α}_{C} + {α}_{D} + {α}_{G} + {α}_{R}$

α refers to total loss, αc refers to loss due to metal conductivity, α_{D} refers to loss due to dielectric loss tangent, α_{G} refers to loss due to conductivity of dielectric, and α_{R} refers to loss due to radiation. The decoupling coupler may use the surface wave corresponding to α_{R} for isolation. As an example 831 illustrated in FIG. 8, the power divider may be disposed on a rear side (i.e., a side located opposite to a side on which the antenna element is disposed) of the antenna substrate, and the decoupling coupler may be disposed on an upper side of the antenna substrate. The decoupling coupler may re-radiate a fed surface wave. In other words, the radiation loss may be reused for the decoupling matching.

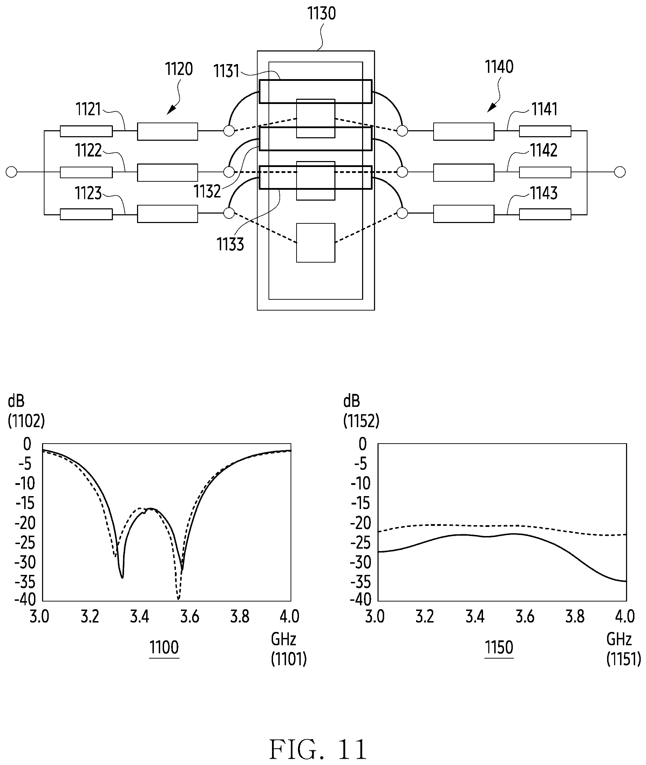

FIG. 11 illustrates an example of equivalent circuitry of a feeding part of a subarray to which a decoupling coupler (e.g., decoupling coupler 450) is coupled according to embodiments.

Referring to FIG. 11, a subarray 1130 may include a 3x1 subarray. The subarray may include three antenna elements. The subarray may include a first antenna element (e.g., a first antenna element 401, a first antenna element 501), a second antenna element (e.g., a second antenna element 402, a second antenna element 502), and a third antenna element (e.g., a third antenna element 403, a third antenna element 505).

A signal of a first polarization may be fed to the subarray 1130. The signal of the first polarization may be transmitted to each antenna element of the subarray 1130 through a first power divider 1120. The first power divider 1120 may include three branches. The first power divider 1120 may include three transmission lines. For example, the first power divider 1120 may include a first transmission line 1121, a second transmission line 1122, and a third transmission line 1123. The signal passing through each transmission line is applied to the corresponding antenna element. The signal of a second polarization may be fed to the subarray 1130. The signal of the second polarization may be transmitted to each antenna element of the subarray 1130 through a second power divider 1140. The second power divider 1140 may include three branches. The second power divider 1140 may include three transmission lines. For example, the second power divider 1140 may include a fourth transmission line 1141, a fifth transmission line 1142, and a sixth transmission line 1143. The signal passing through each transmission line is applied to the corresponding antenna element.

In terms of the first power divider 1120, the first power divider 1120 is an input port, and the second power divider 1140 corresponds to an output port. In terms of the second power divider 1140, the second power divider 1140 is an input port, and the first power divider 1120 corresponds to an output port. Isolation refers to a characteristic in which input of one side is not transmitted to output of another side. When the decoupling technique is applied in aspect of circuit design, each decoupling coupler located in the subarray 1130 may provide an electrical connection between both transmission lines. The decoupling coupler may reduce or prevent a signal supply from a transmission line to another transmission line.

A first decoupling coupler 1131 of the subarray 1300 may electrically connect the first transmission line 1121 and the fourth transmission line 1141. The first decoupling coupler 1131 may function to electrically and magnetically separate the first transmission line 1121 from the fourth transmission line 1141, through a matching network technique. The second decoupling coupler 1132 of the subarray 1300 may electrically connect the second transmission line 1122 to the fifth transmission line 1142. The second decoupling coupler 1132 may function to electrically and magnetically separate the second transmission line 1122 from the fifth transmission line 1142, through the matching network technique. The third decoupling coupler 1133 of the subarray 1300 may electrically connect the third transmission line 1123 and the sixth transmission line 1143. The second decoupling coupler 1132 may function to electrically and magnetically separate the third transmission line 1123 from the sixth transmission line 1143, through the matching network technique.

Graph 1100 represents reflection parameters for each frequency domain. A horizontal axis 1101 of the graph represents a frequency (unit: gigahertz (GHz)), and a vertical axis 1102 represents a size of S₁₁ parameter (unit: dB(decibel). Graph 1150 represents pass parameters for each frequency domain. A horizontal axis 1151 of the graph represents a frequency (unit: gigahertz (GHz)), and a vertical axis 1152 represents a size of S₂₁ parameter (unit: dB(decibel). In each of the graph 1100 and 1150, a solid line is related to the subarray 1130 in which the decoupling coupler is disposed, and a dotted line is related to the subarray in which the decoupling coupler is not disposed.

The lower is the size of the S₂₁ parameter, the higher is the isolation performance. As the decoupling coupler providing an electrical connection between the two polarizations is disposed in the subarray 1130, it is confirmed that the S₂₁ parameter decreases, and an effect on other radiation performance is relatively insufficient.

In FIG. 11, decoupling couplers (e.g., the first decoupling coupler 1131, the second decoupling coupler 1132, and the third decoupling coupler 1133) corresponding to each antenna element are illustrated to represent equivalent circuitry, but this does not necessarily mean that the decoupling coupler should be physically disposed for each element. This is because even if one decoupling coupler is located between the second antenna element and the third antenna element and directly connects the two power dividers, a decoupling effect may be provided to all antenna elements configuring the subarray.

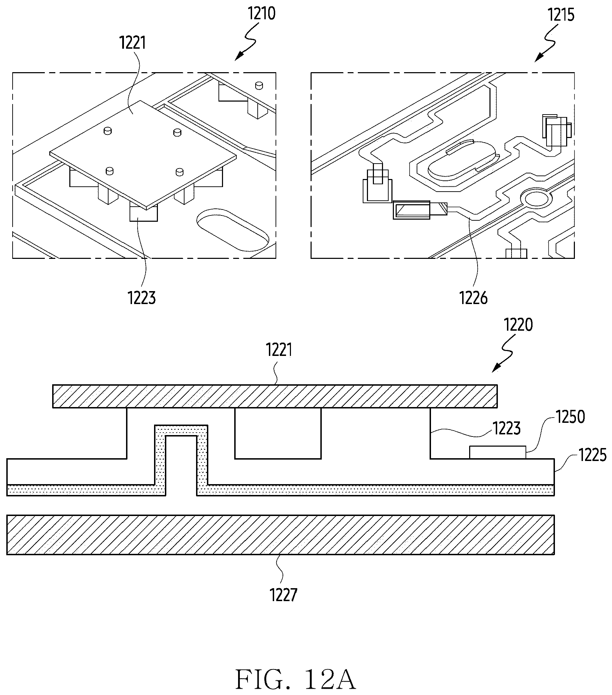

Hereinafter, detailed structures of an array antenna will be described in FIGS. 12A, 12B, 13A, 13B, and 14. To help understand the embodiments of the present disclosure, a structure of an array antenna in which antenna elements are disposed on a first side (e.g., upper side) of an antenna substrate and power divers are disposed on a second side (e.g., rear side) opposite to the first side of the antenna substrate is illustrated, but the embodiments of the present disclosure are not limited to specific structures illustrated in FIGS. 12A, 12B, 13A, 13B, and 14 to be described below.

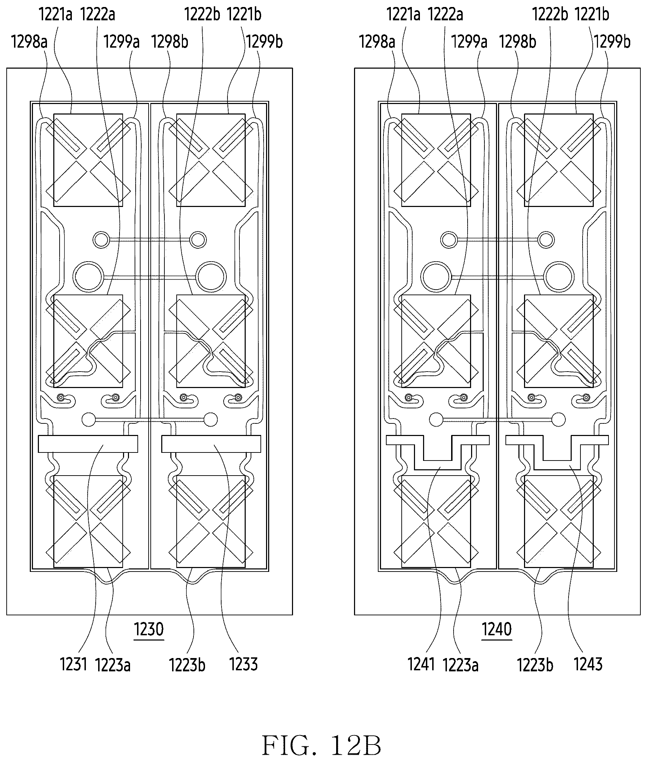

FIGS. 12A and 12B illustrate an example of a deployment of a decoupling coupler (e.g., decoupling coupler 450) according to embodiments.

Referring to FIG. 12A, a first perspective view 1210 illustrates a first side (e.g., upper side) of an antenna substrate. According to an embodiment, the antenna substrate may include a dielectric substrate. Antenna elements may be disposed on the first side of the antenna substrate. According to an embodiment, the antenna element may be a patch antenna. According to an embodiment, the dielectric substrate may include a support part to locate the patch antenna above a predetermined height. According to an embodiment, the support part may be a dielectric.

A second perspective view 1215 illustrates a second side (e.g., rear side) of the antenna substrate. According to an embodiment, a feeding network for a power divider may be disposed on the second side of the antenna substrate. The feeding network may include a plurality of feeding lines. An input line for a first polarization may be branched to an individual feeding line through a first power divider. An input line for a second polarization may be branched to an individual feeding line through a second power divider. Signals of two feeding lines may be applied to one antenna element. An end of each of the feeding lines on the second side of the antenna substrate may correspond to an input port of the antenna element on the first side of the antenna substrate.

A side view 1220 illustrates an example of a stacked structure of the antenna substrate. According to an embodiment, an antenna element 1221 may be disposed on the first side of an antenna substrate 1225. According to an embodiment, the antenna substrate 1225 may be a dielectric. The antenna substrate 1225 may include a support part 1223. The support part 1223 may be coupled to the antenna element 1221 so that the antenna element 1221 is spaced apart above the first side by a predetermined distance. A metal plate 1227, which is a substrate providing a ground surface, may be spaced apart from the antenna substrate 1225 by the predetermined distance. The power divider may be disposed through the spaced apart space. A feeding line 1226 may be disposed on the second side of the antenna substrate 1225. The feeding line 1226 refers to a transmission line for feeding a signal to the antenna element. The feeding line 1226 corresponds to a branch of the power divider. According to an embodiment, the feeding line 126 may be disposed according to a shape of the support 1223 to radiate a RF signal through the antenna element 1221. The feeding line 126 may be disposed along the second side of the support part 1223 formed in the antenna substrate 1225.

The decoupling coupler 1250 according to embodiments of the present disclosure may be disposed on the first side of the antenna substrate 1225. The decoupling coupler 1250 may function to reduce an effect where signals caused from the feeding line 1226 are coupled to another feeding line. Even if the decoupling coupler 1250 is not physically coupled to the feeding line 1226, the existing coupling may be offset through coupling of the decoupling coupler 1250. Furthermore, as the decoupling coupler 1250 re-radiates (e.g., re-radiation of the decoupling coupler 1060 of FIG. 10) a caused surface wave to the antenna substrate 1225, a signal transmitted from the feeding line 1226 to another feeding line (e.g., a feeding line providing another polarization) may be reduced.

Referring to FIG. 12B, a first plan view 1230 illustrates a first side of an antenna substrate of an array antenna including two subarrays. The first side illustrates the first side of the antenna substrate of the first perspective view 1215. For example, each subarray may be a 3x1 subarray. The subarrays may include a first subarray and a second subarray. The first subarray may include an antenna element 1221a, an antenna element 1222a, and an antenna element 1223a. The second subarray may include an antenna element 1221b, an antenna element 1222b, and an antenna element 1223b. A first decoupling coupler 1231 may provide an electrical connection between power dividers of the first subarray. The power dividers may include branches of feeding lines to provide different polarizations. For example, for each element of the first subarray, a conductive pattern 1298a for the first polarization and a conductive pattern 1299a for the second polarization may be disposed on one side (e.g., the first side or a second side opposite to the first side) of the antenna substrate. To reduce mutual influence between signals of different polarizations, the first decoupling coupler 1231 may be located between the power dividers on the first side of the antenna substrate. The first decoupling coupler 1231 may provide a coupling connection between two power dividers. Re-radiation according to the coupling connection may function to offset an existing coupling effect. A second decoupling coupler 1233 may provide an electrical connection between power dividers of the second subarray. The power dividers may include branches of the feeding lines to provide different polarizations. For example, for each element of the second subarray, a conductive pattern 1298b for the first polarization and a conductive pattern 1299b for the second polarization may be disposed on one side (e.g., the first side or the second side opposite to the first side) of the antenna substrate.

A second plan view 1240 illustrates a first side of an antenna substrate of an array antenna including two subarrays. For example, each subarray may be a 3x1 subarray. The subarrays may include a first subarray and a second subarray. The first subarray may include an antenna element 1221a, an antenna element 1222a, and an antenna element 1223a. The second subarray may include an antenna element 1221b, an antenna element 1222b, and an antenna element 1223b. A third decoupling coupler 1241 may provide an electrical connection between power dividers of the second subarray. The power dividers may include branches of feeding lines to provide different polarizations. For example, for each element of the first subarray, a conductive pattern 1298a for the first polarization and a conductive pattern 1299a for the second polarization may be disposed on one side (e.g., the first side or the second side opposite to the first side) of the antenna substrate. A fourth decoupling coupler 1243 may provide an electrical connection between power dividers of the second subarray. The power dividers may include branches of feeding lines to provide different polarizations. For example, for each element of the second subarray, a conductive pattern 1298b for the first polarization and a conductive pattern 1299b for the second polarization may be disposed on one side (e.g., the first side or the second side opposite to the first side) of the antenna substrate.

Re-radiation according to the electrical connection may function to offset the existing coupling effect. According to an embodiment, the decoupling coupler may have a different shape other than a simple straight strip line or patch. For example, the shape of the decoupling coupler may be the shape illustrated in FIGS. 6A, 6B, and 6C. The Different shape may provide the different amount of coupling. According to the degree to which decoupling is required, the decoupling coupler of the different shape may be disposed on the first side of the antenna substrate corresponding to the two power dividers.

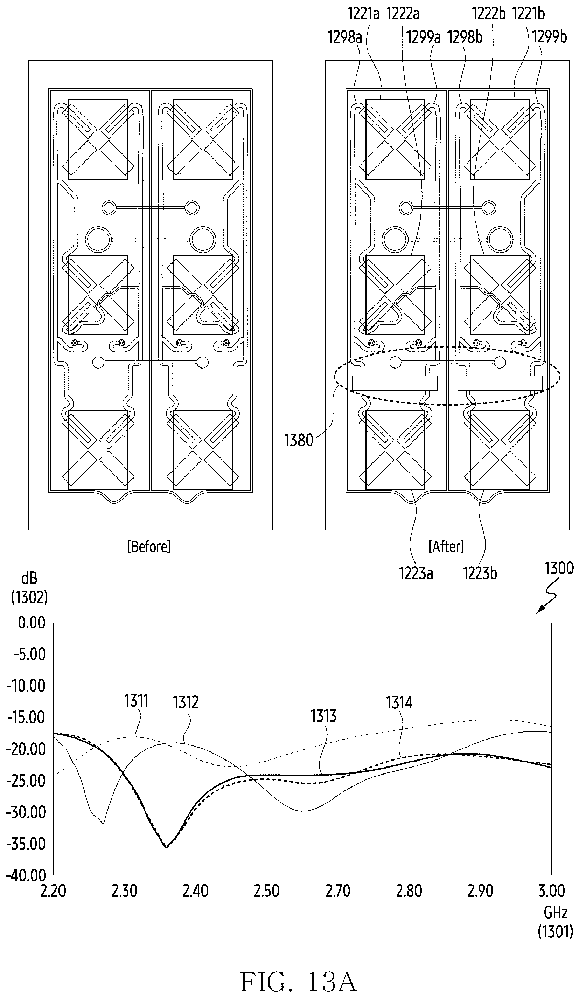

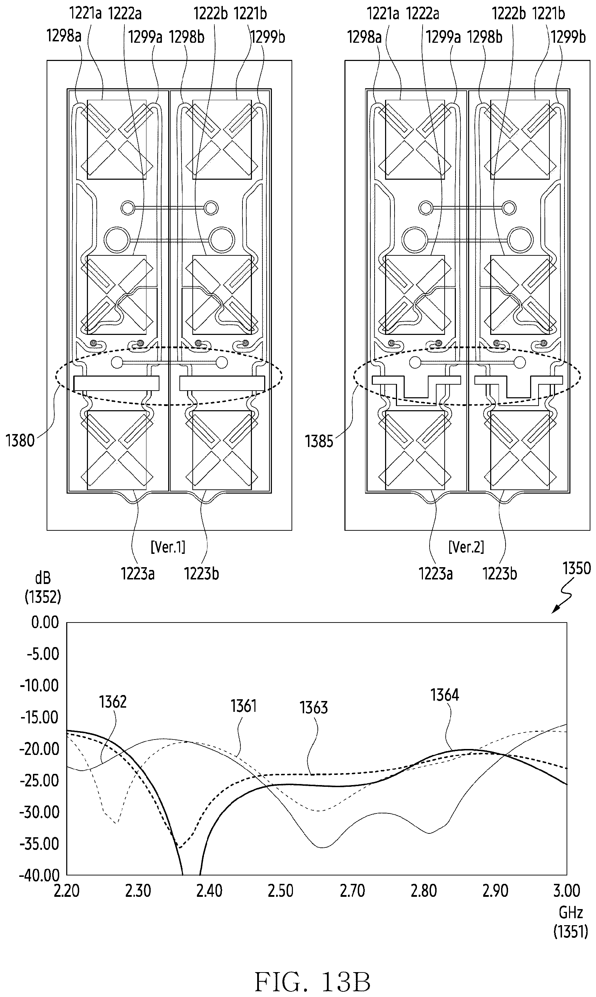

FIGS. 13A and 13B illustrate examples of performance of a decoupling coupler according to embodiments. An array antenna may include a plurality of subarrays. Each of the plurality of subarrays may correspond to a 3x1 subarray and may be coupled to a decoupling coupler.

Referring to FIG. 13A, graph 1300 represents performance of a subarray (e.g., a subarray of an array antenna according to the plan view 1230 of FIG. 12A) in which a decoupling coupler 1380 (e.g., a first decoupling coupler 1231, a second decoupling coupler 1233) is disposed and a subarray in which the decoupling coupler 1380 is not disposed. A horizontal axis 1301 of the graph 1300 represents a frequency (unit: gigahertz (GHz)) and a vertical axis 1302 represents a size of isolation performance (unit: decibel (dB)). A first line 1311 represents cross-pol isolation performance of the subarray in which the decoupling coupler 1380 is not disposed. A second line 1312 represents cross-pol isolation performance of the subarray in which the decoupling coupler 1380 is disposed. A third line 1313 represents co-pol isolation performance of the subarray in which the decoupling coupler 1380 is not disposed. A fourth line 1314 represents co-pol isolation performance of the subarray in which the decoupling coupler 1380 is disposed.

Referring to the third line 1313 and the fourth line 1314, it is confirmed that there is little change in co-polar isolation performance. However, referring to the first line 1311 and the second line 1312, it is confirmed that the cross-pol isolation performance is improved maximally by 9 dB (about -21 dB to -30 dB). The decoupling coupler 1380 may improve cross-pol isolation performance in the subarray and between the subarrays.

Referring to FIG. 13B, graph 1350 represents performance of a subarray in which a straight decoupling coupler 1380 (e.g., the subarray of the array antenna according to the plan view 1230 of FIG. 12A) is disposed and a subarray in which a U-type decoupling coupler 1385 (e.g., the third decoupling coupler 1241, the fourth decoupling coupler 1243) is disposed. A horizontal axis 1351 of the graph 1350 represents a frequency (unit: gigahertz (GHz)) and a vertical axis 1352 represents a size of isolation performance (unit: decibel (dB)). A first line 1361 represents cross-pol isolation performance of the subarray in which a straight decoupling coupler 1380 is disposed. The second line 1312 represents cross-pol isolation performance of the subarray in which a 'U'-type decoupling coupler 1385 is disposed. The third line 1313 represents co-pol isolation performance of the subarray in which the straight decoupling coupler 1380 is disposed. The fourth line 1314 represents co-pol isolation performance of the subarray in which the 'U'-type decoupling coupler 1385 is disposed.

Referring to the first line 1361 and a second line 1362, it is confirmed that the cross-pol isolation performance is improved maximally by 5 dB (about -30 dB to -35.6 dB). According to an embodiment, when an operating frequency is changed, the cross-pol isolation performance is changed, and thus a shape of the decoupling coupler may be specified based on the operating frequency. Referring to the third line 1313 and the fourth line 1314, it is confirmed that the co-pol isolation performance is improved by 2 dB (about -24.3 dB to -26.4 dB) in the corresponding frequency domain.

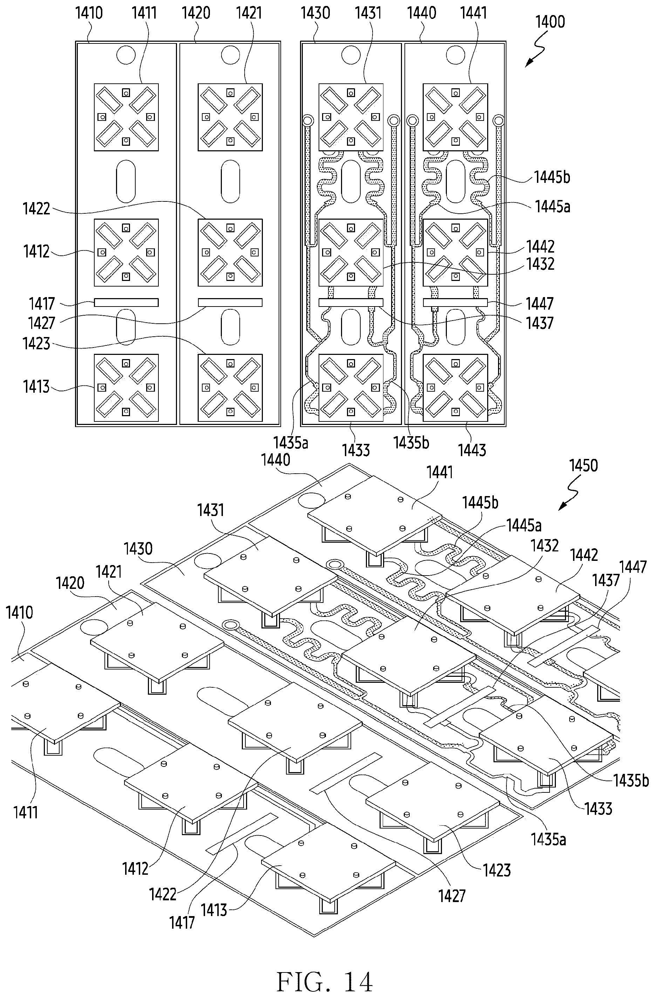

FIG. 14 illustrates an example of an array antenna having decoupling couplers according to an embodiment. The array antenna may include a plurality of subarrays.

Referring to FIG. 14, a plan view 1400 is a diagram of an array antenna 1400 viewed from above. A perspective view 1450 is a diagram viewed from above and sideways to three-dimensionally represent the array antenna 1400. The array antenna 1400 may include four subarrays. Each subarray may be a 3x1 subarray. The array antenna 1400 may include a first subarray 1410, a second subarray 1420, a third subarray 1430, and a fourth subarray 1440.

The first subarray 1410 may include a first antenna element 1411, a second antenna element 1412, and a third antenna element 1413. A first decoupling coupler 1417 may be disposed in the antenna substrate of the first subarray 1410. According to an embodiment, the first decoupling coupler 1417 may be disposed in a space corresponding to the second antenna element 1412 and the third antenna element 1413 above one side of the antenna substrate. The second subarray 1420 may include a first antenna element 1421, a second antenna element 1422, and a third antenna element 1423. The second decoupling coupler 1427 may be disposed in the antenna substrate of the second subarray 1420. According to an embodiment, the second decoupling coupler 1427 may be disposed in a space corresponding to the second antenna element 1422 and the third antenna element 1423 above one side of the antenna substrate. The third subarray 1430 may include a first antenna element 1431, a second antenna element 1432, and a third antenna element 1433. The third decoupling coupler 1417 may be disposed in the antenna substrate of the third subarray 1430. According to an embodiment, the third decoupling coupler 1437 may be disposed in a space corresponding to the second antenna element 1432 and the third antenna element 1433 above one side of the antenna substrate. The fourth subarray 1440 may include a first antenna element 1441, a second antenna element 1442, and a third antenna element 1443. The fourth decoupling coupler 1447 may be disposed in the antenna substrate of the fourth subarray 1440. According to an embodiment, the fourth decoupling coupler 1447 may be disposed in a space corresponding to the second antenna element 1442 and the third antenna element 1443 above one side of the antenna substrate.

The decoupling coupler according to embodiments may be disposed at a location to provide an electrical connection to power dividers of the subarray, in order to increase cross-pol isolation performance.

Hereinafter, a deployment of the power divider will be described based on the third subarray 1430 and the fourth subarray 1440. Although not illustrated for contrast, the first subarray 1410 and the second subarray 1420 include the power divider therein, respectively. For example, the power divider (or feeding lines, feeding network) for the first subarray 1410 may be disposed on one side of the antenna substrate (e.g., PCB). The one side of the antenna substrate may be opposite to one side of the antenna substrate in which the first antenna element 1411, the second antenna element 1412, and the third antenna element 1413 are disposed. For example, the power divider (or feeding lines, feeding network) for the second subarray 1420 may be disposed on one side of the antenna substrate (e.g., PCB). The one side of the antenna substrate may be opposite to one side of the antenna substrate in which the first antenna element 1421, the second antenna element 1422, and the third antenna element 1423 are disposed. Descriptions of the power divider for the third subarray 1430 and the fourth subarray 1440 may be applied to the first subarray 1410 and the second subarray 1420 in the same or similar manner, of course.

The third subarray 1430 may include the first antenna element 1431, the second antenna element 1432, the third antenna element 1433, and feeding network circuitry connected to each antenna element. The feeding network circuitry may include a first power divider 1435a and a second power divider 1435b. The first power divider 1435a may have three branches to feed a signal of a first polarization to each of the first antenna element 1431, the second antenna element 1432, and the third antenna element 1433. The second power divider 1435b may have three branches to feed a signal of a second polarization to each of the first antenna element 1431, the second antenna element 1432, and the third antenna element 1433.

The third decoupling coupler 1437 for the third subarray 1430 may electrically connect the first power divider 1435a to the second power divider 1435b. The third decoupling coupler 1437 may be disposed on the first side of the antenna substrate, and the first power divider 1435a and the second power divider 1435b may be disposed on the second side opposite to the first side of the antenna substrate. The third decoupling coupler 1437 may reduce an influence of coupling between signals caused by the feeding lines of the first polarization and signals caused by the feeding lines of the second polarization, by being located in a region between the first power divider 1435a and the second power divider 1435b.

Although the third decoupling coupler 1437 does not directly connect the first power divider 1435a to the second power divider 1435b, when viewed from above, a location where the third decoupling coupler 1437 is disposed may overlap the first power divider 1435a and the second power divider 1435b. Although not illustrated in FIG. 14 that the third decoupling coupler 1437 directly connects the first power divider 1435a to the second power divider 1435b, according to another embodiment not being covered by the claims, the third decoupling coupler 1437 may be located on the rear side so that the first power divider 1435a and the second power divider 1435b may be directly connected through the third decoupling coupler 1437. In addition, according to another embodiment, when viewed from above, the location where the third decoupling coupler 1437 is disposed may be located between the region of the first power divider 1435a and the second power divider 1435b.

The fourth subarray 1440 may include the first antenna element 1441, the second antenna element 1442, the third antenna element 1443, and feeding network circuitry connected to each antenna element. The feeding network circuitry may include a third power divider 1445a and a second power divider 1434b. The third power divider 1445a may have three branches to feed a signal of a first polarization to each of the first antenna element 1441, the second antenna element 1442, and the third antenna element 1443. The fourth power divider 1445b may have three branches to feed a signal of a second polarization to each of the first antenna element 1441, the second antenna element 1442, and the third antenna element 1443.

The fourth decoupling coupler 1447 for the fourth subarray 1440 may electrically connect the third power divider 1445a to the fourth power divider 1445b. The fourth decoupling coupler 1447 may be disposed on the first side of the antenna substrate, and the third power divider 1445a and the fourth power divider 1445b may be disposed on the second side opposite to the first side of the antenna substrate. The third decoupling coupler 1447 may reduce an influence of coupling between signals caused by the feeding lines of the first polarization and signals caused by the feeding lines of the second polarization, by being located in a region between the third power divider 1445a and the fourth power divider 1445b.

Although the fourth decoupling coupler 1447 does not directly connect the third power divider 1445a to the second power divider 1445b, when viewed from above, a location where the fourth decoupling coupler 1447 is disposed may overlap the third power divider 1445a and the fourth power divider 1445b. Although not illustrated in FIG. 14 that the fourth decoupling coupler 1447 directly connects the first power divider 1445a to the second power divider 1445b, according to another embodiment not being covered by the claims, the third decoupling coupler 1447 may be located on the rear side so that the third power divider 1445a and the fourth power divider 1445b may be directly connected through the fourth decoupling coupler 1447. In addition, according to another embodiment, when viewed from above, the location where the fourth decoupling coupler 1447 is disposed may be located between the region of the third power divider 1445a and the fourth power divider 1445b.

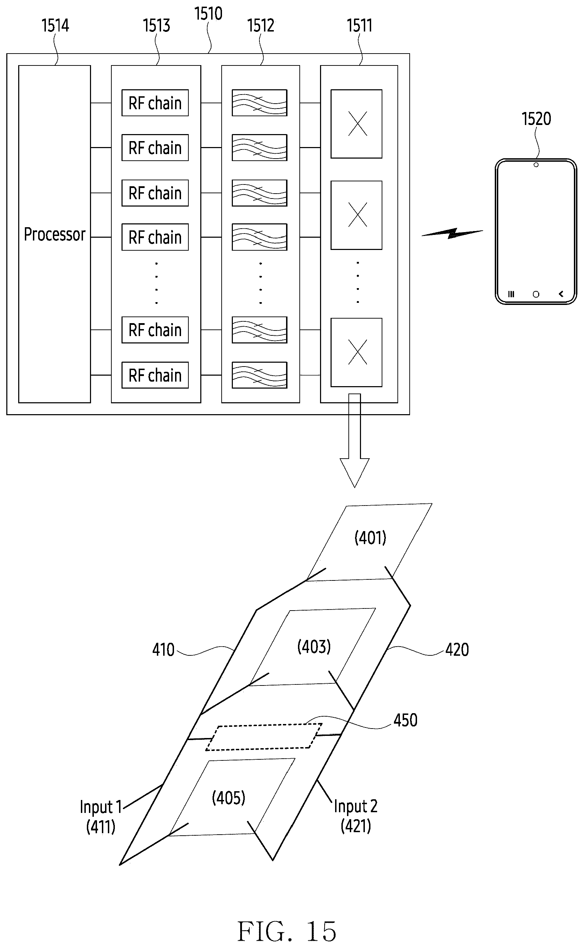

FIG. 15 illustrates a functional configuration of an electronic device including an antenna having a decoupling coupler according to an embodiment. An electronic device 1510 may be a base station 110 of FIG. 1 or an MMU of the base station 110. The electronic device 1510 may communicate with a terminal 1520 (e.g., terminal 120). Meanwhile, unlike the illustration, the present disclosure does not exclude that the electronic device 1510 may be implemented in the terminal 120 of FIG. 1. As well as an antenna structure mentioned in FIGS. 1 to 14, the electronic device including the same is included in embodiments of the present disclosure. The electronic device 1510 may include an antenna structure including the decoupling coupler disposed between power dividers electrically connected to a subarray.

Referring to FIG. 15, an exemplary functional configuration of the electronic device 1510 is illustrated. The electronic device 1510 may include an antenna unit 1511, a filter unit 1512, a radio frequency (RF) processing unit 1513, and a control unit 1514.

The antenna unit 1511 may include a plurality of antennas. The antenna performs functions for transmitting and receiving a signal through a wireless channel. The antenna may include a conductor formed on a substrate (e.g., PCB) or a radiator formed of a conductive pattern. The antenna may emit the up-converted signal on the wireless channel or obtain the signal emitted by another device. Each antenna may be referred to as an antenna element or an antenna component. In some embodiments, the antenna unit 1511 may include an antenna array in which a plurality of antenna elements forms a row. The antenna unit 1511 may be electrically connected to the filter unit 1512 through RF signal lines. The antenna unit 1511 may be disposed in a PCB including a plurality of antenna elements. The PCB may include a plurality of RF signal lines connecting each antenna element to a filter of the filter unit 1512. The RF signal lines may be referred to as a feeding network.

The antenna unit 1511 may provide a received signal to the filter unit 1512 or may emit a signal provided from the filter unit 1512 into the air. The antenna unit 1511 according to embodiments of the present disclosure may include the antenna element including the decoupling coupler. As described through FIGS. 1 to 14, the decoupling coupler refers to matching network circuitry for an electrical connection between a power divider for a first polarization and a power divider for a second polarization in each subarray of the antenna array. A subarray 400 of FIG. 4 is illustrated as an antenna having the decoupling coupler in FIG. 15, but descriptions described below may be applied in the same or similar manner in the matching network circuitry for decoupling of the present invention as well as in the shapes of FIGS. 6A to 6C.

The filter unit 1512 may perform filtering to transmit a signal of a desired frequency. The filter unit 1512 may perform a function for selectively identifying a frequency by forming a resonance. The filter unit 1512 may include at least one of a band pass filter, a low pass filter, a high pass filter, or a band reject filter. That is, the filter unit 1512 may include RF circuitry for obtaining a signal of a frequency band for transmission or a frequency band for reception. The filter unit 1512 according to various embodiments may electrically connect the antenna unit 1511 to the RF processing unit 1513.

The RF processing unit 1513 may include a plurality of RF paths. The RF path may be a unit of a path through which a signal received through an antenna or a signal emitted through the antenna passes. At least one RF path may be referred to as an RF chain. The RF chain may include a plurality of RF elements. The RF elements may include an amplifier, a mixer, an oscillator, a DAC, an ADC, and the like. For example, the RF processing unit 1513 may include an up converter that up-converts a digital transmission signal of a base band into a transmission frequency, and a digital-to-analog converter (DAC) that converts the up-converted digital transmission signal into an analog RF transmission signal. The upconverter and the DAC form a portion of a transmission path. The transmission path may further include a power amplifier (PA) or a coupler (or a combiner). In addition, for example, the RF processing unit 1513 may include an analog-to-digital converter (ADC) that converts an analog RF reception signal into a digital reception signal and a down converter that converts a digital reception signal into a digital reception signal of the base band. The ADC and the down converter form a portion of the reception path. The reception path may further include a low-noise amplifier (LNA) or a coupler (or a divider). RF components of the RF processor may be implemented in a PCB. The base station 1510 may include a structure in which an antenna unit 1511 to a filter unit 1512 to an RF processing unit 1513 are stacked in this order. The antennas and RF components of the RF processor may be implemented on the PCB, and filters may be repeatedly fastened between PCBs to form a plurality of layers.

The control unit 1514 may control overall operations of the electronic device 1510. The control unit 1514 may include various modules for performing communication. The control unit 1514 may include at least one processor such as a modem. The control unit 1514 may include modules for digital signal processing. For example, the control unit 1514 may include the modem. When transmitting data, the control unit 1514 generates complex symbols by encoding and modulating a transmission bit string. In addition, for example, when receiving data, the control unit 1514 restores a reception bit string by demodulating and decoding a baseband signal. The control unit 1514 may perform functions of a protocol stack required by the communication standard.

In FIG. 15, a functional configuration of the electronic device 1510 is described as an equipment in which the antenna structure of the present disclosure may be utilized. However, the example in FIG. 15 are only an exemplary configuration for utilizing the antenna structure according to various embodiments of the present disclosure described through FIGS. 1 to 14, and embodiments of the present disclosure are not limited to components of equipment illustrated in FIG. 15. Therefore, an antenna module including an antenna structure, a communication equipment of another configuration, and an antenna structure itself may also be understood as an embodiment of the present disclosure.

In the present disclosure, a polarization of about (+)45 degrees and a polarization of about (-)45 degrees have been described as an example to describe two polarizations (e.g., a first polarization and a second polarization) in a vertical relationship, but the description of the two polarizations may also be applied to an antenna structure using a vertical polarization and a horizontal polarization or an antenna structure using a polarization of about (+)95 degree and a polarization of about (-)95 degree.

An electronic device according to embodiments may include an antenna substrate, and an antenna array including a subarray, wherein_the subarray may include a plurality of antenna elements. The electronic device may include a feeding network circuitry including a first power divider for a first polarization and a second power divider for a second polarization different from the first polarization. The electronic device may comprise a network circuitry for decoupling of a first signal of the first power divider and a second signal of the second power divider may be included. The subarray may be disposed on a first side of the antenna substrate. The feeding network circuitry may be disposed on a second side of the antenna substrate opposite to the first side of the antenna substrate. The network circuitry for decoupling may be disposed in a region between the first power divider and the second power divider on the first side of the antenna substrate.

According to an embodiment, the second polarization may be perpendicular to the first polarization.

According to an embodiment, the feeding network circuitry and the network circuitry for decoupling may be electrically connected through coupling feeding.

According to an embodiment, each of the antenna elements may include a patch antenna. The antenna substrate may include a dielectric substrate. The dielectric substrate may include a protrusion portion for supporting each of the antenna elements on a first side of the dielectric substrate. The feeding network circuitry may be disposed on the first side of the dielectric substrate. A feeding line of the feeding network circuitry may be disposed on a second side of the dielectric substrate opposite to the first side of the dielectric substrate.

According to an embodiment, the network circuitry for decoupling may include a detachable metal strip.

According to an embodiment, a length and a width of the metal strip may be based on a structure of the antenna substrate, physical properties of the substrate, and an operating frequency.

According to an embodiment, the network circuitry for decoupling may include a strip line type, a patch type, or a loop type coupler.

According to an embodiment, the network circuitry for decoupling may include a metal strip. A length and a width of the metal strip may be specified based on a structure of the antenna substrate, physical properties of the substrate, and an operating frequency.

According to an embodiment, the metal strip may be disposed in the region to form capacitance in accordance with an amount of coupling of the first signal and the second signal between the first power divider and the second power divider.

According to an embodiment, the metal strip may be made of a deformable material.

According to an embodiment, the antenna elements include a first antenna element, a second antenna element, and a third antenna element. The first power divider may be configured to feed a signal of the first polarization to each of the first antenna element, the second antenna element, and the third antenna element. The second power divider may be configured to feed a signal of the second polarization to each of the first antenna element, the second antenna element, and the third antenna element. The network circuitry for decoupling may be disposed in at least one of spaces between antenna elements or spaces at both ends of all antenna elements, on the opposite side with the feeding network circuitry in the antenna substrate.

According to an embodiment, the electronic device may include a processor, a metal plate, a plurality of antenna substrates, and an array antenna including a plurality of subarrays. For each subarray, a subarray among the plurality of subarrays may include a feeding network circuitry including a first power divider for a first polarization and a second power divider for a second polarization different from the first polarization, and a network circuitry for decoupling of a first signal of the first power divider and a second signal of the second power divider. The subarray among the plurality of subarrays may be disposed on a first side of the antenna substrate corresponding to the subarray. The feeding network circuitry may be disposed on a second side of the antenna substrate opposite to the first side. The feeding network circuitry may be disposed on a second side opposite to the first side of the antenna substrate. The network circuitry for decoupling may be disposed in a region between the first power divider and the second power divider on the first side of the antenna substrate.

According to embodiments, the second polarization may be perpendicular to the first polarization.

According to embodiments, the feeding network circuitry and the network circuitry for decoupling may be electrically connected through coupling feeding.

According to embodiments, each of the plurality of the antenna substrates may include a dielectric substrate. The dielectric substrate may further include a protrusion portion for supporting and antenna element. A feeding line of the feeding network circuitry may be disposed on a side opposite to the protrusion portion of the dielectric substrate.

According to an embodiment, the network circuitry for decoupling may include a detachable metal strip.

According to an embodiment, a length and a width of the metal strip may be based on a structure of the antenna substrate, physical properties of the substrate, and an operating frequency.

According to an embodiment, the matching network circuitry for decoupling may include a metal strip. A length and a width of the metal strip may be specified based on a structure of the antenna substrate, physical properties of the substrate, and an operating frequency.

According to an embodiment, the metal strip may be disposed in the region to form capacitance in accordance with an amount of coupling of the first signal and the second signal between the first power divider and the second power divider.

According to an embodiment, the metal strip may be made of a deformable material.

According to an embodiment, the network circuitry for decoupling may include a strip line type, a patch type, or a loop type of coupler.

According to an embodiment, the subarray may be a 3x1 subarray. The network circuitry for decoupling may be disposed in at least one of spaces between antenna elements or spaces at both ends of all antenna elements, on the rear side with the feeding network circuitry in the antenna substrate corresponding to the subarray.

An array antenna according to embodiments of the present disclosure may include a deformable structure on a dielectric substrate around a power divider. A decoupling coupler for transferring power between the power divider capable of antenna feeding and a radiator emitting energy may be disposed. The decoupling coupler according to embodiments may function as a decoupling matching network. In order to improve isolation performance between two signals with different polarizations, the decoupling coupler may provide an electrical connection between two power dividers. As the decoupling coupler is disposed, isolation performance may be secured without an additional space such as a wall. In addition, as the power divider is disposed behind an antenna substrate, the space between the antenna substrate and an antenna element may be secured to facilitate design. In addition, the decoupling coupler has the advantage of less gain loss and easier implementation than a defective ground method.

The present disclosure provides an antenna structure for securing a space of a power divider in an antenna array including a plurality of subarrays and an electronic device including the same.

The present disclosure provides a matching network for increasing isolation performance between subarrays in an electronic device including an array antenna and the electronic device including the same.

A matching network and an electronic device including the same according to embodiments of the present disclosure may reduce a spatial constraint of a power divider and increase isolation performance between the two polarizations through a coupler disposed between power dividers that provide different polarizations.

The effects that can be obtained from the present disclosure are not limited to those described above, and any other effects not mentioned herein will be clearly understood by those having ordinary knowledge in the art to which the present disclosure belongs, from the following description.

Methods according to embodiments described in claims or specifications of the present disclosure may be implemented as a form of hardware, software, or a combination of hardware and software.

In case of implementing as software, a computer-readable storage medium for storing one or more programs (software module) may be provided. One or more programs stored in the computer-readable storage medium are configured for execution by one or more processors in an electronic device. One or more programs include instructions that cause the electronic device to execute methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), another type of optical storage device, or a magnetic cassette. Alternatively, it may be stored in a memory composed of a combination of some or all of them. In addition, a plurality of each configuration memory may be included.

Additionally, a program may be stored in an attachable storage device that may be accessed through a communication network such as the Internet, Intranet, local area network (LAN), wide area network (WAN), or storage area network (SAN), or a combination of them. Such a storage device may be connected to a device performing an embodiment of the present disclosure through an external port. In addition, a separate storage device on the communication network may also access a device that performs embodiment of the present disclosure.

In specific embodiments of the present disclosure described above, an element included in the disclosure is represented in singular or plural numbers according to a specific embodiment presented. However, singular or plural expressions are selected to suit the presented situation for convenience of explanation, the present disclosure is not limited to singular or plural components, and even a component represented in the plural may be composed of a singular number, or a component represented in the singular may be composed of a plural number.

Meanwhile, in the detailed description of the present disclosure, specific embodiments have been described, but of course, various modifications are possible without departing from the scope of the present disclosure as defined by the appended set of claims.

## Claims

1. An electronic device comprising:
an antenna substrate;
an antenna array comprising a subarray (400), the subarray (400) comprising a plurality of antenna elements (401, 403, 405);
a feeding network circuitry including a first power divider (410) for a first polarization and a second power divider (420) for a second polarization different from the first polarization; and
a network circuitry for decoupling of a first signal (411) of the first power divider (410) and a second signal (421) of the second power divider (420),
wherein the subarray (400) is disposed on a first side of the antenna substrate,
wherein the feeding network circuitry is disposed on a second side of the antenna substrate opposite to the first side of the antenna substrate, and
wherein the network circuitry for decoupling is disposed in a region between the first power divider (410) and the second power divider (420) on the first side of the antenna substrate.

2. The electronic device of claim 1, wherein the second polarization is perpendicular to the first polarization.

3. The electronic device of claims 1 to 2,
wherein the feeding network circuitry and the network circuitry for decoupling are electrically connected through coupling feeding.

4. The electronic device of claims 1 to 3,
wherein each of the antenna elements (401, 403, 405) comprises a patch antenna,
wherein the antenna substrate comprises a dielectric substrate,
wherein the dielectric substrate comprises a protrusion portion for supporting each of the antenna elements (401, 403, 405) on a first side of the dielectric substrate,
wherein the network circuitry for decoupling is disposed on the first side of the dielectric substrate, and
wherein a feeding line of the feeding network circuitry is disposed on a second side of the dielectric substrate opposite to the first side of the dielectric substrate.

5. The electronic device of claims 1 to 4,
wherein the network circuitry for decoupling comprises a metal strip, and
wherein a length and a width of the metal strip are specified based on a structure of the antenna substrate, physical properties of a substrate, and an operating frequency.

6. The electronic device of claims 5,
wherein the metal strip is disposed in the region to form a capacitance in accordance with an amount of coupling of the first signal (411) and the second signal (421) between the first power divider (410) and the second power divider (420).

7. The electronic device of claims 5 to 6, wherein the metal strip is made of a deformable material.

8. The electronic device of claims 1 to 7,
wherein the antenna elements (401, 403, 405) include a first antenna element (401), a second antenna element (403), and a third antenna element (405),
wherein the first power divider (410) is configured to feed a signal of the first polarization to each of the first antenna element (401), the second antenna element (403), and the third antenna element (405),
wherein the second power divider (420) is configured to feed a signal of the second polarization with each of the first antenna element (401), the second antenna element (403), and the third antenna element (405), and
wherein the network circuitry for decoupling is disposed in at least one of spaces between antenna elements (401, 403, 405) or spaces at both ends of all antenna elements (401, 403, 405), on an opposite side with the feeding network circuitry in the antenna substrate.

9. An electronic device comprising:
a processor;
a metal plate;
a plurality of antenna substrates; and
an array antenna comprising a plurality of subarrays,
wherein, for each subarray, a subarray (400) among the plurality of subarrays includes:
a feeding network circuitry including a first power divider (410) for a first polarization and a second power divider (420) for a second polarization different from the first polarization; and
a network circuitry for decoupling of a first signal (411) of the first power divider (410) and a second signal (421) of the second power divider (420),
wherein the subarray (400) among the plurality of subarrays is disposed on a first side of an antenna substrate corresponding to the subarray (400),
wherein the feeding network circuitry is disposed on a second side of the antenna substrate opposite to the first side of the antenna substrate, and
wherein the network circuitry for decoupling is disposed in a region between the first power divider (410) and the second power divider (420) on the first side of the antenna substrate.

10. The electronic device of claim 9, wherein the second polarization is perpendicular to the first polarization.

11. The electronic device of claims 9 to 10,
wherein the feeding network circuitry and the network circuitry for decoupling are electrically connected through coupling feeding.

12. The electronic device of claims 9 to 11,
wherein each of the antenna substrates comprise a dielectric substrate,
wherein the dielectric substrate comprises a protrusion portion for supporting an antenna element on a first side of the dielectric substrate,
wherein the network circuitry for decoupling is disposed on the first side of the dielectric substrate, and
wherein a feeding line of the feeding network circuitry is disposed on a second side of the dielectric substrate opposite to the first side of the dielectric substrate.

13. The electronic device of claims 9 to 12,
wherein the network circuitry for decoupling comprises a metal strip, and
wherein a length and a width of the metal strip are specified based on a structure of the antenna substrate, physical properties of a substrate, and an operating frequency.

14. The electronic device of claims 13,
wherein the metal strip is disposed in the region to form a capacitance in accordance with an amount of coupling of the first signal (411) and the second signal (421) between the first power divider (410) and the second power divider (420).

15. The electronic device of claims 13 to 14, wherein the metal strip is made of a deformable material.

## Patentansprüche

1. Elektronische Vorrichtung, umfassend:
ein Antennensubstrat;
eine Gruppenantenne, die eine Untergruppe (400) umfasst, wobei die Untergruppe (400) eine Vielzahl von Antennenelementen (401, 403, 405) umfasst;
eine Speisenetzwerkschaltung, die einen ersten Leistungsteiler (410) für eine erste Polarisation und einen zweiten Leistungsteiler (420) für eine zweite Polarisation, die sich von der ersten Polarisation unterscheidet, beinhaltet; und
eine Netzwerkschaltung zum Entkoppeln eines ersten Signals (411) des ersten Leistungsteilers (410) und eines zweiten Signals (421) des zweiten Leistungsteilers (420),
wobei die Untergruppe (400) auf einer ersten Seite des Antennensubstrats angeordnet ist,
wobei die Speisenetzwerkschaltung auf einer zweiten Seite des Antennensubstrats angeordnet ist, die der ersten Seite des Antennensubstrats gegenüberliegt, und
wobei die Netzwerkschaltung zum Entkoppeln in einem Bereich zwischen dem ersten Leistungsteiler (410) und dem zweiten Leistungsteiler (420) auf der ersten Seite des Antennensubstrats angeordnet ist.

2. Elektronische Vorrichtung nach Anspruch 1, wobei die zweite Polarisation senkrecht zu der ersten Polarisation ist.

3. Elektronische Vorrichtung nach Anspruch 1 bis 2,
wobei die Speisenetzwerkschaltung und die Netzwerkschaltung zum Entkoppeln über eine Kopplungsspeisung elektrisch verbunden sind.

4. Elektronische Vorrichtung nach Anspruch 1 bis 3,
wobei jedes der Antennenelemente (401, 403, 405) eine Patchantenne umfasst,
wobei das Antennensubstrat ein dielektrisches Substrat umfasst,
wobei das dielektrische Substrat einen Vorsprungsabschnitt zum Stützen jedes der Antennenelemente (401, 403, 405) auf einer ersten Seite des dielektrischen Substrats umfasst,
wobei die Netzwerkschaltung zum Entkoppeln auf der ersten Seite des dielektrischen Substrats angeordnet ist und
wobei eine Speiseleitung der Speisenetzwerkschaltung auf einer zweiten Seite des dielektrischen Substrats angeordnet ist, die der ersten Seite des dielektrischen Substrats gegenüberliegt.

5. Elektronische Vorrichtung nach Anspruch 1 bis 4,
wobei die Netzwerkschaltung zum Entkoppeln einen Metallstreifen umfasst und
wobei eine Länge und eine Breite des Metallstreifens basierend auf einer Struktur des Antennensubstrats, den physikalischen Eigenschaften eines Substrats und einer Betriebsfrequenz festgelegt sind.

6. Elektronische Vorrichtung nach Anspruch 5,
wobei der Metallstreifen in dem Bereich angeordnet ist, um eine Kapazität gemäß einem Kopplungsbetrag des ersten Signals (411) und des zweiten Signals (421) zwischen dem ersten Leistungsteiler (410) und dem zweiten Leistungsteiler (420) auszubilden.

7. Elektronische Vorrichtung nach Anspruch 5 bis 6, wobei der Metallstreifen aus einem verformbaren Material besteht.

8. Elektronische Vorrichtung nach Anspruch 1 bis 7,
wobei die Antennenelemente (401, 403, 405) ein erstes Antennenelement (401), ein zweites Antennenelement (403) und ein drittes Antennenelement (405) beinhalten,
wobei der erste Leistungsteiler (410) konfiguriert ist, um ein Signal der ersten Polarisation in jedes des ersten Antennenelements (401), des zweiten Antennenelements (403) und des dritten Antennenelements (405) einzuspeisen,
wobei der zweite Leistungsteiler (420) konfiguriert ist, um ein Signal der zweiten Polarisation mit jedem des ersten Antennenelements (401), des zweiten Antennenelements (403) und des dritten Antennenelements (405) einzuspeisen, und
wobei die Netzwerkschaltung zum Entkoppeln in mindestens einem der Zwischenräume zwischen den Antennenelementen (401, 403, 405) oder der Zwischenräume an beiden Enden aller Antennenelemente (401, 403, 405) auf einer gegenüberliegenden Seite mit der Speisenetzwerkschaltung im Antennensubstrat angeordnet ist.

9. Elektronische Vorrichtung, umfassend:
einen Prozessor;
eine Metallplatte;
eine Vielzahl von Antennensubstraten; und
eine Gruppenantenne, umfassend eine Vielzahl von Untergruppen,
wobei für jede Untergruppe eine Untergruppe (400) aus der Vielzahl von Untergruppen Folgendes beinhaltet:
eine Speisenetzwerkschaltung, die einen ersten Leistungsteiler (410) für eine erste Polarisation und einen zweiten Leistungsteiler (420) für eine zweite Polarisation, die sich von der ersten Polarisation unterscheidet, beinhaltet; und
eine Netzwerkschaltung zum Entkoppeln eines ersten Signals (411) des ersten Leistungsteilers (410) und eines zweiten Signals (421) des zweiten Leistungsteilers (420),
wobei die Untergruppe (400) aus der Vielzahl von Untergruppen auf einer ersten Seite eines Antennensubstrats, das der Untergruppe (400) entspricht, angeordnet ist,
wobei die Speisenetzwerkschaltung auf einer zweiten Seite des Antennensubstrats angeordnet ist, die der ersten Seite des Antennensubstrats gegenüberliegt, und
wobei die Netzwerkschaltung zum Entkoppeln in einem Bereich zwischen dem ersten Leistungsteiler (410) und dem zweiten Leistungsteiler (420) auf der ersten Seite des Antennensubstrats angeordnet ist.

10. Elektronische Vorrichtung nach Anspruch 9, wobei die zweite Polarisation senkrecht zu der ersten Polarisation ist.

11. Elektronische Vorrichtung nach Anspruch 9 bis 10,
wobei die Speisenetzwerkschaltung und die Netzwerkschaltung zum Entkoppeln über eine Kopplungsspeisung elektrisch verbunden sind.

12. Elektronische Vorrichtung nach Anspruch 9 bis 11,
wobei jedes der Antennensubstrate ein dielektrisches Substrat umfasst,
wobei das dielektrische Substrat einen Vorsprungsabschnitt zum Stützen eines Antennenelements auf einer ersten Seite des dielektrischen Substrats umfasst,
wobei die Netzwerkschaltung zum Entkoppeln auf der ersten Seite des dielektrischen Substrats angeordnet ist und
wobei eine Speiseleitung der Speisenetzwerkschaltung auf einer zweiten Seite des dielektrischen Substrats angeordnet ist, die der ersten Seite des dielektrischen Substrats gegenüberliegt.

13. Elektronische Vorrichtung nach Anspruch 9 bis 12,
wobei die Netzwerkschaltung zum Entkoppeln einen Metallstreifen umfasst und
wobei eine Länge und eine Breite des Metallstreifens basierend auf einer Struktur des Antennensubstrats, den physikalischen Eigenschaften eines Substrats und einer Betriebsfrequenz festgelegt sind.

14. Elektronische Vorrichtung nach Anspruch 13,
wobei der Metallstreifen in dem Bereich angeordnet ist, um eine Kapazität gemäß einem Kopplungsbetrag des ersten Signals (411) und des zweiten Signals (421) zwischen dem ersten Leistungsteiler (410) und dem zweiten Leistungsteiler (420) auszubilden.

15. Elektronische Vorrichtung nach Anspruch 13 bis 14, wobei der Metallstreifen aus einem verformbaren Material besteht.

## Revendications

1. Dispositif électronique, comprenant :
un substrat d'antenne ;
un réseau d'antennes comprenant un sous-réseau (400), le sous-réseau (400) comprenant une pluralité d'éléments d'antenne (401, 403, 405) ;
un circuit de réseau d'alimentation comprenant un premier répartiteur de puissance (410) pour une première polarisation et un deuxième répartiteur de puissance (420) pour une deuxième polarisation différente de la première polarisation ; et
un circuit de réseau permettant de découpler un premier signal (411) du premier répartiteur de puissance (410) et un deuxième signal (421) du deuxième répartiteur de puissance (420),
dans lequel le sous-réseau (400) est disposé sur un premier côté du substrat d'antenne,
dans lequel le circuit de réseau d'alimentation est disposé sur un second côté du substrat d'antenne, à l'opposé du premier côté du substrat d'antenne, et
dans lequel le circuit de réseau destiné au découplage est disposé dans une zone située entre le premier répartiteur de puissance (410) et le second répartiteur de puissance (420) sur le premier côté du substrat d'antenne.

2. Dispositif électronique de la revendication 1, dans lequel la deuxième polarisation est perpendiculaire à la première polarisation.

3. Dispositif électronique des revendications 1 à 2,
dans lequel le circuit de réseau d'alimentation et le circuit de réseau de découplage sont reliés électriquement par le biais d'une alimentation de couplage.

4. Dispositif électronique des revendications 1 à 3,
dans lequel chacun des éléments d'antenne (401, 403, 405) comprend une antenne patch,
dans lequel le substrat d'antenne comprend un substrat diélectrique,
dans lequel le substrat diélectrique comprend une partie de saillie pour prendre en charge chacun des éléments d'antenne (401, 403, 405) sur un premier côté du substrat diélectrique,
dans lequel le circuit de réseau destiné au découplage est disposé sur le premier côté du substrat diélectrique, et
dans lequel une ligne d'alimentation du circuit de réseau d'alimentation est disposée sur un second côté du substrat diélectrique, à l'opposé du premier côté du substrat diélectrique.

5. Dispositif électronique des revendications 1 à 4,
dans lequel le circuit de réseau destiné au découplage comprend une bande métallique, et
dans lequel la longueur et la largeur de la bande métallique sont déterminées en se basant sur la structure du substrat d'antenne, les propriétés physiques du substrat et la fréquence de fonctionnement.

6. Dispositif électronique de la revendication 5,
dans lequel la bande métallique est disposée dans la zone afin de former une capacité en fonction du degré de couplage du premier signal (411) et du deuxième signal (421) entre le premier répartiteur de puissance (410) et le deuxième répartiteur de puissance (420).

7. Dispositif électronique des revendications 5 à 6, dans lequel la bande métallique est constituée d'un matériau déformable.

8. Dispositif électronique des revendications 1 à 7,
dans lequel les éléments d'antenne (401, 403, 405) comprennent un premier élément d'antenne (401), un second élément d'antenne (403) et un troisième élément d'antenne (405),
dans lequel le premier répartiteur de puissance (410) est configuré pour transmettre un signal de la première polarisation à chacun du premier élément d'antenne (401), du deuxième élément d'antenne (403) et du troisième élément d'antenne (405),
dans lequel le second répartiteur de puissance (420) est configuré pour transmettre un signal de la deuxième polarisation à chacun du premier élément d'antenne (401), du deuxième élément d'antenne (403) et du troisième élément d'antenne (405), et
dans lequel le circuit de réseau de découplage est disposé dans au moins l'un des espaces situés entre les éléments d'antenne (401, 403, 405) ou des espaces situés aux deux extrémités de tous les éléments d'antenne (401, 403, 405), du côté opposé au circuit de réseau d'alimentation dans le substrat d'antenne.

9. Dispositif électronique, comprenant :
un processeur ;
une plaque métallique ;
une pluralité de substrats d'antenne ; et
une antenne de réseau comprenant une pluralité de sous-réseaux,
dans lequel, pour chaque sous-réseau, un sous-réseau (400) parmi la pluralité de sous-réseaux comprend :
un circuit de réseau d'alimentation comprenant un premier répartiteur de puissance (410) pour une première polarisation et un deuxième répartiteur de puissance (420) pour une deuxième polarisation différente de la première polarisation ; et
un circuit de réseau permettant de découpler un premier signal (411) du premier répartiteur de puissance (410) et un deuxième signal (421) du deuxième répartiteur de puissance (420),
dans lequel le sous-réseau (400), parmi la pluralité de sous-réseaux, est disposé sur un premier côté d'un substrat d'antenne correspondant au sous-réseau (400),
dans lequel le circuit de réseau d'alimentation est disposé sur un second côté du substrat d'antenne, à l'opposé du premier côté du substrat d'antenne, et
dans lequel le circuit de réseau destiné au découplage est disposé dans une zone située entre le premier répartiteur de puissance (410) et le second répartiteur de puissance (420) sur le premier côté du substrat d'antenne.

10. Dispositif électronique de la revendication 9, dans lequel la deuxième polarisation est perpendiculaire à la première polarisation.

11. Dispositif électronique des revendications 9 à 10,
dans lequel le circuit de réseau d'alimentation et le circuit de réseau de découplage sont reliés électriquement par le biais d'une alimentation de couplage.

12. Dispositif électronique des revendications 9 à 11,
dans lequel chacun des substrats d'antenne comprend un substrat diélectrique,
dans lequel le substrat diélectrique comprend une partie de saillie pour prendre en charge un élément d'antenne sur un premier côté du substrat diélectrique,
dans lequel le circuit de réseau destiné au découplage est disposé sur le premier côté du substrat diélectrique, et
dans lequel une ligne d'alimentation du circuit de réseau d'alimentation est disposée sur un second côté du substrat diélectrique, à l'opposé du premier côté du substrat diélectrique.

13. Dispositif électronique des revendications 9 à 12,
dans lequel le circuit de réseau destiné au découplage comprend une bande métallique, et
dans lequel la longueur et la largeur de la bande métallique sont déterminées en se basant sur la structure du substrat d'antenne, les propriétés physiques du substrat et la fréquence de fonctionnement.

14. Dispositif électronique de la revendication 13,
dans lequel la bande métallique est disposée dans la zone afin de former une capacité en fonction du degré de couplage du premier signal (411) et du deuxième signal (421) entre le premier répartiteur de puissance (410) et le deuxième répartiteur de puissance (420).

15. Dispositif électronique des revendications 13 à 14, dans lequel la bande métallique est constituée d'un matériau déformable.
